# EUROPEAN PATENT SPECIFICATION

(11) **EP 4 542 975 B1**
(45) Date of publication and mention of the grant of the patent: **25.03.2026**
(21) Application number: 23863452.1
(22) Date of filing: 05.09.2023
(51) Int. Cl.: H04M 1/02, G06F 1/16, H05K 5/03, H05K 5/06

(54) **DRIVING STRUCTURE AND ELECTRONIC DEVICE COMPRISING SAME**
ANTRIEBSSTRUKTUR UND ELEKTRONISCHE VORRICHTUNG DAMIT
STRUCTURE D'ENTRAÎNEMENT ET DISPOSITIF ÉLECTRONIQUE LA COMPRENANT

(30) Priority: 05.09.2022 KR 20220112055; 31.10.2022 KR 20220142166
(43) Date of publication of application: 23.04.2025
(73) Proprietor: Samsung Electronics Co., Ltd., Suwon-si, Gyeonggi-do 16677 (KR)
(72) Inventor: KIM, Hongjun, Suwon-si Gyeonggi-do 16677 (KR); HAN, Yonggil, Suwon-si Gyeonggi-do 16677 (KR)
(74) Representative: Nederlandsch Octrooibureau
(86) International application number: PCT/KR2023/013212
(87) International publication number: WO 2024/053980

(56) References cited:
- WO-A1-2022/014750
- WO-A1-2022/163875
- CN-A- 111 866 225
- CN-A- 113 114 821
- KR-A- 20110 082 943
- KR-A- 20220 085 823
- US-B1- 10 880 417

## Description

### [Technical Field]

An embodiment of the disclosure relates to a driving structure and an electronic device including the same.

### [Background Art]

Thanks to the remarkable development of information and communication technology and semiconductor technology, the proliferation and use of various electronic devices are rapidly increasing. In particular, recent electronic devices have been developed to enable communication while being carried.

An electronic device may refer to a device that executes a specific function according to a loaded program, such as a home appliance, an electronic notebook, a portable multimedia player, a mobile communication terminal, a tablet PC, a video/audio device, a desktop/laptop computer, or a vehicle navigation device. For example, these electronic devices may output stored information as sound or an image. As the integration level of electronic devices increases and high-speed, large-capacity wireless communication becomes more common, a single electronic device such as a mobile communication terminal may recently be equipped with various functions. For example, in addition to a communication function, an entertainment function such as games, a multimedia function such as music/video playback, a communication and security function for mobile banking, and a function such as schedule management or an electronic wallet are integrated in a single electronic device. These electronic devices are being miniaturized so that users may carry them conveniently.

As mobile communication services are extended to the multimedia service area, the size of a display in an electronic device may be increased to allow a user to fully use multimedia services as well as voice calls and short messages.

KR 2011 0082943 A discloses a mobile terminal including a terminal body having a receptacle, a sliding member coupled to the housing and a display member having a variable size of a screen exposed to the outside as the sliding member is moved relative to the terminal body.

### [Detailed Description of the Invention]

### [Technical Solution]

An electronic device according to various embodiments of the disclosure includes a first housing, a second housing configured to slide with respect to the first housing, a display including a first display area disposed on the first housing and a second display area extending from the first display area, wherein at least a portion of the second display area is configured to bend based on the sliding of the second housing, and a driving structure configured to provide a driving force for the sliding of the second housing with respect to the first housing. The driving structure includes a first magnetic body fixedly disposed on the first housing, a first rack gear disposed in the second housing, facing the first magnetic body, and including a second magnetic body having a polarity opposite to a polarity of the first magnetic body, a second rack gear disposed at least partially parallel to the first rack gear within the second housing and connected to the second display area, and a pinion gear disposed between the first rack gear and the second rack gear and configured to engage with both the first rack gear and the second rack gear. When the second housing slides in a first direction with respect to the first housing, the first rack gear is configured to move in a second direction opposite to the first direction with respect to the second housing by magnetism, and the second rack gear is configured to move in the first direction with respect to the second housing by rotation of the pinion gear corresponding to the movement of the first rack gear.

### [Brief Description of Drawings]

FIG. 1 is a block diagram illustrating an electronic device in a network environment according to an embodiment of the disclosure.
FIG. 2 is a diagram illustrating a state in which a second display area of a display is accommodated in a housing according to an embodiment of the disclosure.
FIG. 3 is a diagram illustrating a state in which a second display area of a display is exposed to the outside of a housing according to an embodiment of the disclosure.
FIG. 4 is an exploded perspective view illustrating an electronic device according to an embodiment of the disclosure.
FIG. 5 is an exploded perspective view illustrating a first housing according to an embodiment of the disclosure.
FIG. 6 is a perspective view illustrating a first housing having components built therein according to an embodiment of the disclosure.
FIG. 7 is an exploded perspective view illustrating a second housing according to an embodiment of the disclosure.
FIGS. 8A and 8B are a perspective view and plan view illustrating a second cover member according to an embodiment of the disclosure.
FIGS. 9A and 9B are front and rear perspective views illustrating a second rear plate according to an embodiment of the disclosure.
FIG. 10 is an exploded perspective view illustrating a first cover member, a second cover member, and a driving structure according to an embodiment of the disclosure.
FIGS. 11A and 11B are a perspective view and side view illustrating a second rack gear and display coupling structure according to an embodiment of the disclosure.
FIG. 12 is a perspective view illustrating a pinion gear according to an embodiment of the disclosure.
FIG. 13 is a cross-sectional view illustrating an arrangement relationship of a driving structure in an electronic device according to an embodiment of the disclosure.
FIGS. 14A and 14B are perspective views illustrating a state in which a second display area of a display is accommodated in a housing according to an embodiment of the disclosure.
FIGS. 15A and 15B are perspective views illustrating a state in which a second display area of a display is exposed to the outside of a housing according to an embodiment of the disclosure.
FIG. 16 is a side perspective view comparing a state in which a second display area of a display is accommodated in a housing with a state in which the second display area of the display is exposed to the outside of the housing according to an embodiment of the disclosure.
FIG. 17 is a diagram illustrating an arrangement relationship between a driving structure and a housing according to an embodiment of the disclosure.
FIG. 18 is a diagram illustrating a cross-section taken along line A-A' of FIG. 17 according to an embodiment of the disclosure.
FIGS. 19A to 19B are diagrams illustrating a first rack gear according to an embodiment of the disclosure.
FIGS. 20A and 20B are diagrams illustrating a second housing having a concave-convex structure formed thereon according to an embodiment of the disclosure.
FIG. 21 is a diagram illustrating a first rack gear including a bearing member according to an embodiment of the disclosure.
FIG. 22 is a diagram illustrating an electronic device including a waterproof member according to an embodiment of the disclosure.

### [Mode for Carrying out the Invention]

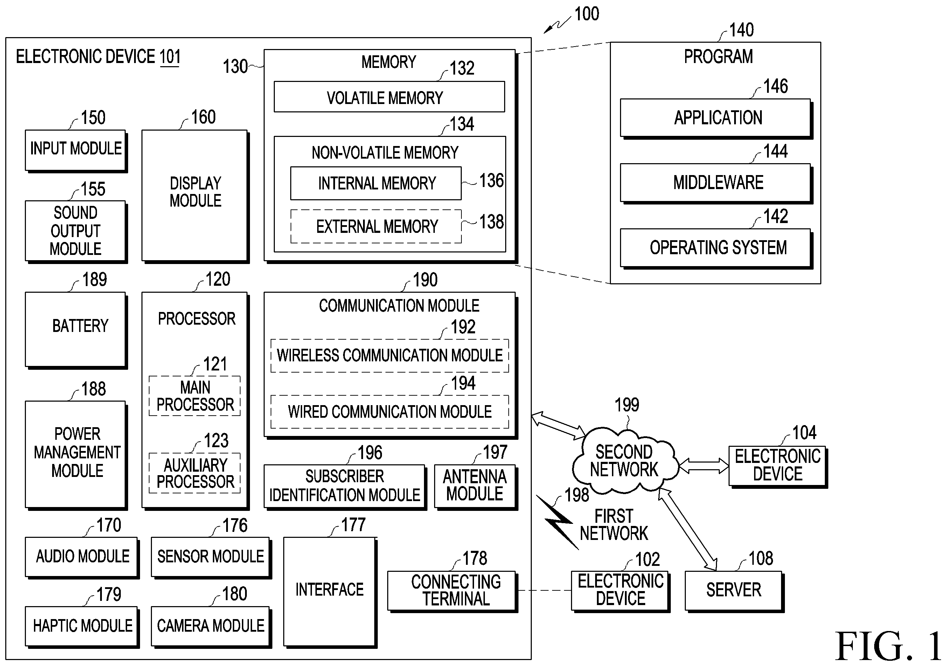

FIG. 1 is a block diagram illustrating an electronic device in a network environment according to embodiments of the disclosure.

Referring to FIG. 1, an electronic device 101 in a network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160). The processor 120 may execute, for example, software (e.g., a program 140) to control at least one other component (e.g., a hardware or software component) of the electronic device 101 coupled with the processor 120, and may perform data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or a sub-processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the sub-processor 123, the sub-processor 123 may be adapted to consume less power than the main processor 121, or to be specific to a specified function. The sub-processor 123 may be implemented as separate from, or as part of the main processor 121.

The sub-processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the sub-processor 123 (e.g., an image signal processor or a communication processor) may be implemented as part of another component (e.g., the camera module 180 or the communication module 190) functionally related to the sub-processor 123. According to an embodiment, the sub-processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the strength of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support a technology for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support a requirement specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module may include an antenna including a radiating element composed of a conductive material or a conductive pattern formed on a substrate (e.g., a PCB). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to an embodiment, the antenna module 197 may form an mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. **In** another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1^{st}" and "2^{nd}", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with embodiments of the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

According to embodiments, each component (e.g., a module or a program) of the above-described components may include a single entity or multiple entities, and some of the multiple entities may be separately disposed in different components. According to embodiments, one or more of the above-described components may be omitted, or one or more other components may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to embodiments, operations performed by the module, the program, or another component may be carried out sequentially, in parallel, repeatedly, or heuristically, or one or more of the operations may be executed in a different order or omitted, or one or more other operations may be added.

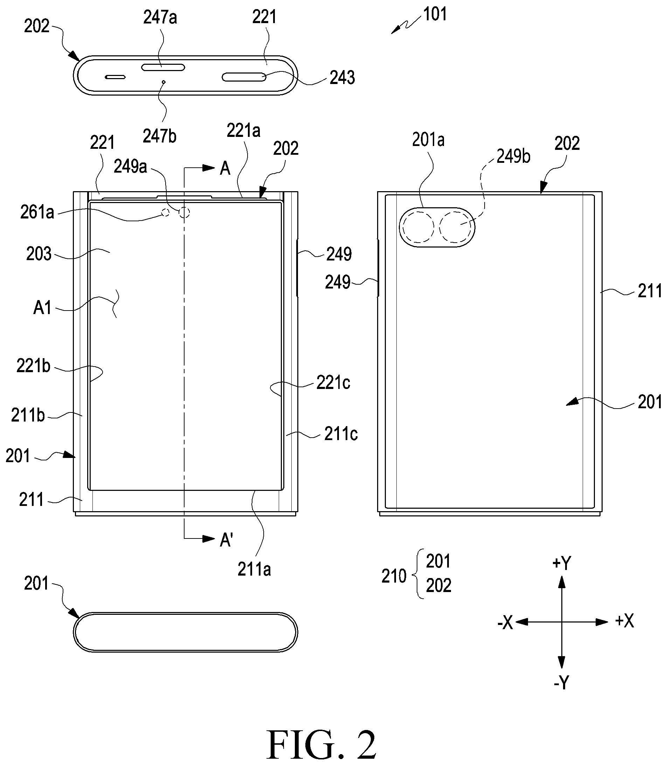

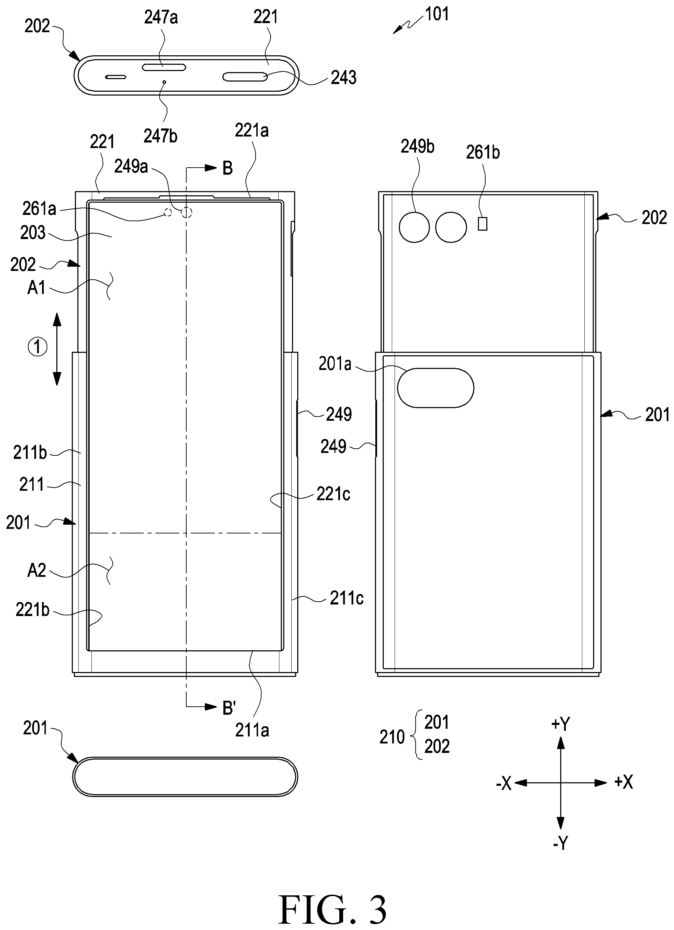

FIG. 2 is a diagram illustrating a state in which a second display area A2 of a display 203 is accommodated in a housing 210 according to an embodiment of the disclosure. FIG. 3 is a diagram illustrating a state in which the second display area A2 of the display 203 is exposed to the outside of the housing 210 according to an embodiment of the disclosure.

FIGS. 2 and 3 illustrate a structure in which the display 203 (e.g., a flexible display or rollable display) extends in a longitudinal direction (e.g., +Y direction), when viewed from the front of the electronic device 101. However, the direction of extension of the display 203 is not limited to one direction (e.g., +Y direction). For example, a design modification may be made such that the display 203 is extendable in an upward direction (e.g., +Y direction), a right direction (e.g., +X direction), a left direction (e.g., -X direction), and/or a downward direction (e.g., -Y direction).

The state illustrated in FIG. 2 may be defined as a slide-in state of the electronic device 101 or a closed state of the second display area A2 of the display 203.

The state illustrated in FIG. 3 may be defined as a slide-out state of the electronic device 101 or an opened state of the second display area A2 of the display 203. Referring to FIGS. 2 and 3, the electronic device 101 may include the housing 210. The housing 210 may include a first housing 201 and a second housing 202 disposed to be movable with respect to the first housing 201. In an embodiment, it may be interpreted as a structure in which the first housing 201 is disposed to be slidable with respect to the second housing 202 in the electronic device 101. According to an embodiment, the second housing 202 may be disposed to be reciprocable by a predetermined distance in a direction illustrated with respect to the first housing 201, for example, in a direction indicated by an arrow ①.

According to an embodiment, the second housing 202 may be referred to as a slide part or a slide housing, and movable with respect to the first housing 201. According to an embodiment, the second housing 202 may accommodate various electrical and electronic components such as a circuit board or a battery.

According to an embodiment, the slide-in state of the electronic device 101 (or the slide-out state of the electronic device 101) may be changed to the slide-out state of the electronic device 101 (or the slide-in state of the electronic device 101) based on a predefined user input. For example, the slide-in state of the electronic device 101 (or the slide-out state of the electronic device 101) may be changed to the slide-out state (or the slide-in state of the electronic device 101) in response to a user input to a physical button exposed through a portion of the first housing 201 or a portion of the second housing 202. For example, the slide-in state (or the slide-out state of the electronic device 101) may be changed to the slide-out state (or the slide-in state of the electronic device 101) in response to a touch input to an executable object displayed in a screen display area (e.g., a first display area A1). For example, the slide-in state (or the slide-out state of the electronic device 101) may be changed to the slide-out state (or the slide-in state of the electronic device 101) in response to a voice input received through a microphone having a contact point on the screen display area (e.g., the first display area A1) and having a strength equal to or greater than a reference level 101. For example, the slide-in state (or the slide-out state of the electronic device 101) may be changed to the slide-out state (or the slide-in state of the electronic device 101) in response to an external force applied to the first housing 201 and/or the second housing 202 to move the second housing 202 with respect to the first housing 201. For example, the slide-in state (or the slide-out state of the electronic device 101) may be changed to the slide-out state (or the slide-in state of the electronic device 101) in response to a user input identified from an external electronic device (e.g., earbuds or a smart watch) connected to the electronic device 101. However, the slide-in/slide-out operation of the electronic device 101 is not limited thereto.

According to an embodiment, the first housing 201 may accommodate a motor, a speaker, a SIM socket, and/or a sub-circuit board electrically connected to a main circuit. The second housing 202 may accommodate the main circuit board with electrical components such as an application processor (AP) and a communication processor (CP) mounted thereon.

According to an embodiment, the first housing may include a first cover member 211 (e.g., a main case). The first cover member 211 may include a (1-1)^{th} sidewall 211a, a (1-2)^{th} sidewall 211b extending from the (1-1)^{th} sidewall 211a, and a (1-3)^{th} sidewall 211c extending from the (1-1)^{th} sidewall 211a and substantially parallel to the (1-2)^{th} sidewall 211b. According to an embodiment, the (1-2)^{th} sidewall 211b and the (1-3)^{th} sidewall 211c may be formed substantially perpendicular to the (1-1)^{th} sidewall 211a.

According to an embodiment, the (1-1)^{th} sidewall 211a, the (1-2)^{th} sidewall 211b, and the (1-3)^{th} sidewall 211c of the first cover member 211 may be formed with one side (e.g., a front surface) open to accommodate (or surround) at least a portion of the second housing 202. For example, the second housing 202 may be at least partially surrounded by the first housing 201 and slide in a direction parallel to one surface, for example, in the direction of the arrow ①, while being guided by the first housing 201. According to an embodiment, the (1-1)^{th} sidewall 211a, the (1-2)^{th} sidewall 211b, and/or the (1-3)^{th} sidewall 211c of the first cover member 211 may be integrally formed. According to an embodiment, the (1-1)^{th} sidewall 211a, the (1-2)^{th} sidewall 211b, and/or the (1-3)^{th} sidewall 211c of the first cover member 211 may be formed as separate housings and coupled or assembled.

According to an embodiment, the first cover member 211 may be formed to surround at least a portion of the display 203. For example, at least a portion of the display 203 may be formed to be surrounded by the (1-1)^{th} sidewall 211a, the (1-2)^{th} sidewall 211b, and/or the (1-3)^{th} sidewall 211c of the first cover member 211.

According to an embodiment, the second housing 202 may include a second cover member 221 (e.g., a slide plate). The second cover member 221 may have a plate shape and include a surface supporting internal components. For example, the second cover member 221 may support at least a portion (e.g., the first display area A1) of the display 203. According to an embodiment, the second cover member 221 may be referred to as a front cover.

According to an embodiment, the second cover member 221 may include a (2-1)^{th} sidewall 221a, a (2-2)^{th} sidewall 221b extending from the (2-1)^{th} sidewall 221a, and a (2-3)^{th} sidewall 221c extending from the (2-1)^{th} sidewall 221a and substantially parallel to the (2-2)^{th} sidewall 221b. According to an embodiment, the (2-2)^{th} sidewall 221b and the (2-3)^{th} sidewall 221c may be formed substantially perpendicular to the (2-1)^{th} sidewall 221a.

According to various embodiments, the second housing 202 may move in a first direction (e.g., the direction ①) parallel to the (2-2)^{th} sidewall 221b or the (2-3)^{th} sidewall 221c, forming the slide-in state and slide-out state of the electronic device 101. The second housing 202 may move to be located at a first distance from the (1-1)^{th} sidewall 211a of the first hosing 201 in the slide-in state of the electronic device 101 and at a second distance larger than the first distance from the (1-1)^{th} sidewall 211a of the first hosing 201 in the slide-out state of the electronic device 101. In an embodiment, the first housing 201 may be formed to surround a portion of the (2-1)^{th} sidewall 221a in the slide-in state of the electronic device 101.

According to an embodiment, the electronic device 101 may have an intermediate state between the slide-in state (e.g., a fully closed state in FIG. 2) and the slide-out state (e.g., a fully opened state in FIG. 3). The distance between the (1-1)^{th} sidewall 211a and the (2-1)^{th} sidewall 221a in the intermediate state of the electronic device 101 may be smaller than the distance between the (1-1)^{th} sidewall 211a and the (2-1)^{th} sidewall 221a in the fully opened state of the electronic device 101, and greater than the distance between the (1-1)^{th} sidewall 211a and the (2-1)^{th} sidewall 221a in the fully closed state of the electronic device 101. According to an embodiment, as at least a portion of the display 203 slides in the intermediate state of the electronic device 101, an area exposed to the outside may vary. For example, in the intermediate state of the electronic device 101, the ratio between the width (an X-direction length) and height (a Y-direction length) of the display 203 and/or the distance between the (1-1)^{th} sidewall 211a and the (2-1)^{th} sidewall 221a may be changed based on sliding movement of the electronic device 101.

According to an embodiment, the electronic device 101 may include the display 203, key input devices 249, a connector hole 243, audio modules 247a and 247b, or camera modules 249a and 249b. According to an embodiment, the electronic device 101 may further include an indicator (e.g., an LED device) or various sensor modules.

According to various embodiments, the display 203 may include the first display area A1 and the second display area A2 configured to be exposed to the outside of the electronic device 101 based on sliding movement of the housing 210. According to an embodiment, the first display area A1 may be disposed on the second housing 202. For example, the first display area A1 may be disposed on the second cover member 221 of the second housing 202. According to an embodiment, the second display area A2 may extend from the first display area A1, and as the first housing 201 slides with respect to the second housing 202, the second display area A2 may be accommodated into the first housing 201 or visually exposed to the outside of the electronic device 101. According to an embodiment, as the electronic device 101 is changed from the slide-out state to the slide-in state, the display 203 may extend in a downward direction (e.g., -Y direction). For example, in the slide-out state of the electronic device 101, the second display area A2 may be visually exposed under the display 203 (e.g., in the -Y direction). According to an embodiment, as the electronic device 101 is changed from the slide-out state to the slide-in state, the display 203 may extend in an upward direction (e.g., +Y direction). For example, in the slide-out state of the electronic device 101, the second display area A2 may be visually exposed on the display 203 (e.g., in the +Y direction).

According to various embodiments, the second display area A2 may be accommodated into an internal space of the housing 210 or exposed to the outside of the electronic device 101 by moving while being guided substantially by an area of the first housing. According to an embodiment, the second display area A2 may move based on the sliding movement of the second housing 202 in the first direction (e.g., the direction indicated by the arrow ①). For example, a portion of the second display area A2 may be deformed into a curved surface at a position corresponding to a curved surface (not shown) of the first housing 201 during the sliding movement of the second housing 202.

According to various embodiments, when viewed from above the second cover member 221 (e.g., a front cover), when the electronic device 101 is changed from the slide-in state to the slide-out state (e.g., the second housing 202 slides to extend from the first housing 201), the second display area A2 may form a substantially flat surface with the first display area A1, while gradually being exposed to the outside of the first housing 201. According to an embodiment, the display 203 may be coupled to or disposed adjacent to a touch sensing circuit, a pressure sensor capable of measuring the intensity (pressure) of a touch, and/or a digitizer that detects a magnetic stylus pen. According to an embodiment, regardless of the slide-in or slide-out state of the electronic device 101, an exposed portion of the second display area A2 may be located on a portion of the first housing, and a portion of the second display area A2 may maintain a curved shape at the position corresponding to the curved surface (not shown).

According to an embodiment, the key input devices 249 may be located in an area of the housing 210 (e.g., the first housing 201 and/or the second housing 202). Depending on the appearance and a use state, the electronic device 101 may be designed to be without the illustrated key input devices 249 or to include additional key input device(s). According to an embodiment, the electronic device 101 may include a key input device not shown, such as a home key button or a touch pad disposed around the home key button. According to an embodiment, at least some of the key input devices 249 may be disposed on the (1-1)^{th} sidewall 211a, the (1-2)^{th} sidewall 211b, and/or the (1-3)^{th} sidewall 211c of the first housing 201. According to an embodiment, at least some of the key input devices 249 may be disposed on the (2-1)^{th} sidewall 221a, the (2-2)^{th} sidewall 221b, and/or the (2-3)^{th} sidewall 221c of the second housing 202.

According to an embodiment, the connector hole 243 may be omitted depending on an embodiment, and may accommodate a connector (e.g., a USB connector) for transmitting power and/or data to and from an external electronic device. According to an embodiment (not shown), the electronic device 101 may include a plurality of connector holes 243, and some of the plurality of connector holes 243 may function as connector holes for transmitting and receiving audio signals to and from an external electronic device. In the illustrated embodiment, the connector hole 243 is disposed on the second housing 202, to which the disclosure is not limited. The connector hole 243 or a connector hole not shown may be disposed on the first housing 201.

According to an embodiment, the audio modules 247a and 247b may include at least one speaker hole 247a or at least one microphone hole 247b. One of the speaker holes 247a may be provided as a receiver hole for voice calls, and the other may be provided as an external speaker hole. The electronic device 101 may include a microphone for obtaining sound, and the microphone may obtain sound external to the electronic device 101 through the microphone hole 247b. According to an embodiment, the electronic device 101 may include a plurality of microphones to detect the direction of sound. According to an embodiment, the electronic device 101 may include an audio module in which the speaker hole 247a and the microphone hole 247b are implemented as a single hole, or include a speaker (e.g., a piezo speaker) without the speaker hole 247a. According to an embodiment, the speaker hole 247a and the microphone hole 247b may be located in the first housing 201 and/or the second housing 202.

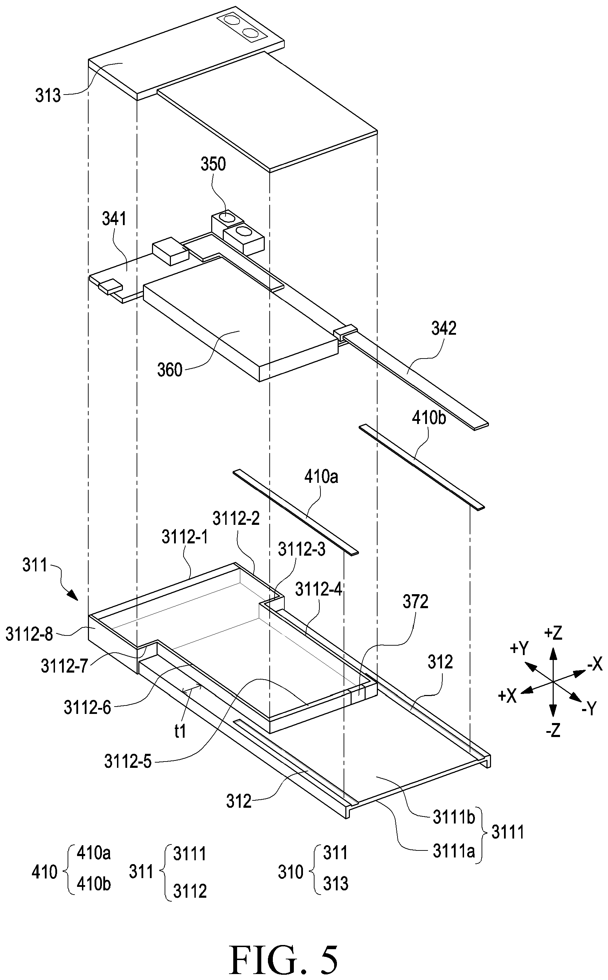

According to an embodiment, the camera modules 249a and 249b may include a first camera module 249a (e.g., front camera) and a second camera module 249b (e.g., rear camera) (e.g., the second camera module 249b in FIGS. 5A and 5B). According to an embodiment, the electronic device 101 may include at least one of a wide-angle camera, a telephoto camera, or a close-up camera, and according to an embodiment, include an IR projector and/or an IR receiver to measure a distance to a subject. The camera modules 249a and 249b may include one or more lenses, an image sensor, and/or an image signal processor. The first camera module 249a may be disposed to face in the same direction as the display 203. For example, the first camera module 249a may be disposed around the first display area A1 or in an area overlapping the display 203 and, when disposed in the area overlapping the display 203, may be able to capture a subject through the display 203. According to an embodiment, the first camera module 249a may not be visually exposed to a screen display area (e.g., the first display area A1) and include a hidden under display camera (UDC). According to an embodiment, the second camera module 249a may capture a subject in a direction opposite to the display A1. According to an embodiment, the first camera module 249a and/or the second camera module 249b may be disposed on the second housing 202. According to an embodiment, a plurality of second camera modules 249b may be formed and arranged in various manners. For example, the plurality of second camera modules 249b may be arranged along the width direction (X-axis direction) substantially perpendicular to a sliding movement direction (e.g., Y-axis direction) of the electronic device 101. **In** another example, the plurality of second camera modules 249b may be arranged along the sliding movement direction (e.g., Y-axis direction) of the electronic device 101. **In** another example, the plurality of second camera modules 249b may be arranged in N*M rows and columns like a matrix.

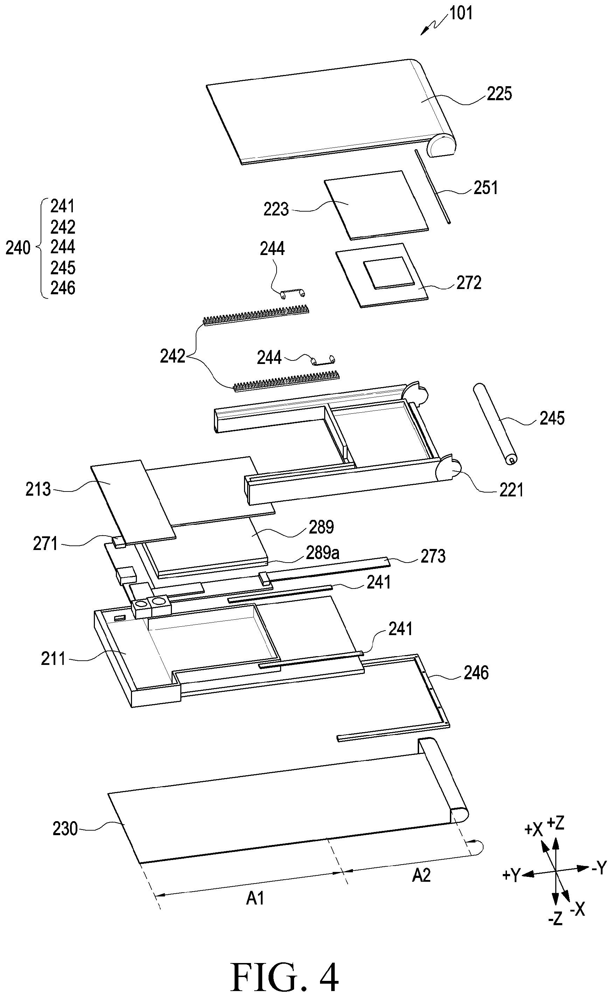

According to an embodiment, the second camera module 249b may not be visually exposed to the outside of the electronic device 101 in the slide-in state of the electronic device 101, and may capture the outside of the electronic device 101 in the slide-out state of the electronic device 101. According to an embodiment, the second camera module 249b may capture the outside of the electronic device 101 in the slide-in state and/or slide-out state of the electronic device 101. For example, at least a portion (e.g., a first rear plate 213 and/or a second rear plate 225 in FIG. 4) of the housing 210 may be substantially transparent, and the second camera module 249b may capture the outside of the electronic device 101 through the first rear plate 213 and/or the second rear plate 225. According to an embodiment, in the slide-in state and slide-out state of the electronic device 101, the second camera module 249b may be visually exposed to the outside of the electronic device 101 and capture the outside. For example, the first housing 201 (e.g., the first rear plate 213 in FIG. 4) may include an opening 201a for the second camera module 249b.

According to an embodiment, an indicator (not shown) of the electronic device 101 may be disposed in the first housing 201 or the second housing 202, and include an LED to provide state information about the electronic device 101 as a visual signal. Sensor modules 261a and 261b of the electronic device 101 may generate an electrical signal or data value corresponding to an internal operational state or an external environmental state of the electronic device 101. The sensor modules 261a and 261b may include a proximity sensor, a fingerprint sensor, and/or a biometric sensor (e.g., an iris/facial recognition sensor or an HRM sensor). In another embodiment, the sensor modules 261a and 261b may further include at least one of a gesture sensor, a gyro sensor, a barometric pressure sensor, a magnetic sensor, an acceleration sensor, a grip sensor, a color sensor, an IR sensor, a temperature sensor, a humidity sensor, or an illuminance sensor. According to an embodiment, the sensor modules 261a and 261b may be disposed in the first housing 201 and/or the second housing 202. For example, the sensor modules 261a and 261b may include a first sensor module 261a (e.g., a proximity sensor or an illuminance sensor) disposed on the front surface of the electronic device 101 and/or a second sensor module 261b (e.g., a heart rate monitoring (HRM) sensor) disposed on the rear surface of the electronic device 101.

FIG. 4 is an exploded perspective view illustrating the electronic device 101 according to various embodiments of the disclosure.

Referring to FIG. 4, the electronic device 101 may include the first housing 201, the second housing 202, a display assembly 230, and a driving structure 240. The configurations of the first housing 201, the second housing 202, and the display assembly 230 in FIG. 4 may be wholly or partially identical to those of the first housing 201, the second housing 202, and the display 203 in FIGS. 2 and 3. The embodiment of FIG. 4 may be partially combined with the embodiment of FIGS. 2 and 3.

According to an embodiment, the housing 210 may include the first housing 201 and the second housing 202 disposed to be movable with respect to the first housing 201. **In an** embodiment, the first housing 201 may be interpreted as a structure disposed to be slidable with respect to the second housing 202 in the electronic device 101. According to an embodiment, the second housing 202 may be disposed to be reciprocally movable a predetermined distance in an illustrated direction with respect to the first housing 201, for example, in the direction indicated by the arrow ① in FIG. 3 (e.g., in the y-axis direction).

According to an embodiment, the second housing 202 may be referred to as a slide part or a slide housing, and may be movable with respect to the first housing 201.

According to an embodiment, the first housing 201 may include the first cover member 211 (e.g., the first cover member 211 in FIGS. 2 and 3) and the first rear plate 213.

According to an embodiment, the first cover member 211 may accommodate at least a component (e.g., a battery 289 or a camera module (e.g., 249a in FIG. 2) in at least a portion thereof. According to an embodiment, the first cover member 211 may accommodate the battery 289. For example, the first cover member 211 may include a recess for accommodating the battery 289 therein. The first cover member 211 may be connected to a battery cover 289a and surround at least a portion of the battery 289 together with the battery cover 289a. According to an embodiment, the first cover member 211 may protect components (e.g., the battery 289, the camera module (e.g., 249a in FIG. 2), and a first circuit board 271) located in the first housing 201 from external impact. According to an embodiment, the first circuit board 271 accommodating electronic components (e.g., the processor 120 and/or the memory 130 in FIG. 1) may be connected to the first cover member 211.

According to an embodiment, the first rear plate 213 may substantially form at least a portion of the exterior of the first housing 201 or the electronic device 101. For example, the first rear plate 213 may be coupled to the outer surface of the first cover member 211. According to an embodiment, the first rear plate 213 may provide a decorative effect on the exterior of the electronic device 101. The first rear plate 213 may be made of at least one of metal, glass, synthetic resin, or ceramic.

According to an embodiment, the second housing 202 may include a second cover member 221 (e.g., the second cover member 221 in FIGS. 2 and 3), a rear cover 223, and the second rear plate 225.

According to an embodiment, the second cover member 221 may be connected to the first housing 201 through the driving structure 240 to be described below, and linearly reciprocate in one direction (e.g., the arrowed direction ① in FIG. 3) while being guided by the driving structure 240.

According to an embodiment, the second cover member 221 may be formed of a metallic material and/or a non-metallic (e.g., polymer) material. According to an embodiment, a second circuit board 272 accommodating electronic components (e.g., the processor 120 and/or the memory 130 in FIG. 1) may be connected to the second cover member 221. According to an embodiment, the second cover member 221 may protect components (e.g., the second circuit board 272 and the rear cover 223) located in the second housing 202 from external impact.

According to an embodiment, the rear cover 223 may protect a component (e.g., the second circuit board 272) located in the second cover member 221. For example, the rear cover 223 may be connected to the second cover member 221 and formed to surround at least a portion of the second circuit board 272. According to an embodiment, the rear cover 223 may include an antenna pattern (e.g., at least one antenna element) for communicating with an external electronic device 101. For example, when the rear cover 223 is formed as an injection-molded product (e.g., an antenna carrier) of a dielectric material, the at least one antenna element may be disposed on an outer surface (e.g., one surface facing a +Z-axis direction) of the rear cover 223. For example, the at least one antenna element may include a laser direct structuring (LDS) antenna pattern formed on the outer surface of the rear cover 223. For example, the at least one antenna element may be formed on the rear cover 223 in a built-in manner during injection molding. For example, the at least one antenna element may be configured to transmit or receive a wireless signal in a specified frequency band (e.g., a legacy band) by being electrically connected to a wireless communication circuit (e.g., the wireless communication module 192 in FIG. 1) disposed on the second circuit board 272.

According to an embodiment, the second rear plate 225 may substantially form at least a portion of the exterior of the second housing 202 or the electronic device 101. For example, the second rear plate 225 may be coupled to the outer surface of the second cover member 221. According to an embodiment, the second rear plate 225 may provide a decorative effect on the exterior of the electronic device 101. The second rear plate 225 may be made of at least one of metal, glass, synthetic resin, or ceramic.

According to an embodiment, the display 230 may be referred to as a flexible display, a foldable display, and/or a rollable display. According to an embodiment, the first display area A1 of the display 230 may be supported by a rigid body, and the second display area A2 may be supported by a bendable structure. For example, the first display area A1 may be supported by one surface of the first cover member 211 or a plate not shown. The second display area A2 may be supported by a roller structure 249.

According to an embodiment, as the second housing 202 slides, the roller structure 249 may rotate in a direction corresponding to a movement direction of the second housing 202. For example, referring to FIG. 4, when the second housing 202 is changed from the slide-in state to the slide-out state, the roller structure 249 may rotate in a first rotational direction (e.g., clockwise). For example, referring to FIG. 4, when the second housing 202 is changed from the slide-out state to the slide-in state, the roller structure 249 may rotate in a second rotational direction (e.g., counterclockwise) opposite to the first rotational direction. According to an embodiment, the roller structure 249 may be coupled to the second cover member 221.

According to an embodiment, the driving structure 240 may move the second housing 202 relative to the first housing 201. For example, the driving structure 240 may be configured to provide a driving force for sliding movement of the second housing 202 with respect to the first housing 201. The driving structure 240 may include a first rack gear 242 that slides within the second housing 202, a second rack gear 246 that slides in an opposite direction to the first rack gear 242 within the second housing 202, and a pinion gear 244 configured to engage with the first rack gear 242 and the second rack gear 246 between the first rack gear 242 and the second rack gear 246. According to an embodiment, the driving structure 240 may further include a first magnetic body 241 disposed to face the first rack gear 242 within the first housing 201. According to an embodiment, the driving structure 240 may further include the roller structure 249 for sliding the display 230. A detailed description will be given below of the configuration and structure of the driving structure 240.

According to an embodiment, a sweeper member 251 may be a component for preventing a foreign material from being introduced into an area for extending the display 230. For example, the sweeper member 251 may be formed of fabric or a brush. According to an embodiment, the sweeper member 251 may include a waterproof function.

According to an embodiment, the memory may include, for example, volatile memory or nonvolatile memory.

According to an embodiment, the interface may include, for example, a high definition multimedia interface (HDMI), a universal serial bus (USB) interface, an SD card interface, and/or an audio interface. The interface may electrically or physically connect the electronic device 101 to an external electronic device 101, and include, for example, a USB connector, an SD card/MMC connector, or an audio connector.

According to an embodiment, the second housing 202 may accommodate the second circuit board 272 (e.g., a main board). According to an embodiment, the processor, the memory, and/or the interface may be mounted on the second circuit board 272. The processor may include, for example, at least one of a CPU, an AP, a GPU, an ISP, a sensor hub processor, or a CP. According to various embodiments, the second circuit board 272 may include a flexible printed circuit board type radio frequency cable (FRC). The second circuit board 272 may be disposed on at least a portion of the second cover member 221 and electrically connected to an antenna module and a communication module.

According to an embodiment, the electronic device 101 may include the first circuit board 271 (e.g., the sub-circuit board) spaced apart from the second circuit board 272 (e.g., the main circuit board) within the first housing 201. The first circuit board 271 may be electrically connected to the second circuit board 272 through a flexible printed circuit board (FPCB) 273. The first circuit board 271 may be electrically connected to electrical components disposed in an end area of the electronic device 101, such as the battery 289 or a speaker and/or a SIM socket, to transmit a signal and power. According to an embodiment, the first circuit board 271 may accommodate an antenna member (not shown) (e.g., a coil) or be connected to the antenna member (not shown). The antenna member (not shown) may include a multi-function coil or multi-function core (MFC) antenna for performing a wireless charging function, a near field communication (NFC) function, and/or an electronic payment function. For example, the battery 289 may receive power from the external electronic device 101 using the antenna member (not shown) for wireless charging. **In** another example, the battery 289 may transmit power to the external electronic device 101 using the antenna member (not shown) for wireless charging.

According to an embodiment, the battery 289 is a device for supplying power to at least one component of the electronic device 101, and may include a non-rechargeable primary battery, a rechargeable secondary battery, or a fuel cell. The battery 289 may be disposed integrally within the electronic device 101 or detachably from the electronic device 101. According to an embodiment, the battery 289 may be formed as a single integral battery or include a plurality of separate batteries. According to an embodiment, the battery 289 may be located in the first cover member 211. For example, the battery 289 may be surrounded by the battery cover 289a. According to another embodiment, the battery 289 may be located within the first housing 201 and slide together with the first housing 201.

According to an embodiment, at least a portion of the second housing 202 may be disposed to be accommodated in the first housing 201 in the slide-in state of the electronic device 101. As the second housing 202 is disposed to be accommodated in the first housing 201, the overall volume of the electronic device 101 may be reduced. According to an embodiment, when the second housing 202 is accommodated in the first housing 201, the size of the visually exposed display 230 may be minimized. For example, when the second housing 202 is fully accommodated in the first housing 201, the first display area A1 of the display 230 may be visually exposed, and at least a portion (e.g., a portion facing the -Z axis) of the second display area A2 may be located between the battery 289 and the first rear plate 213.

According to an embodiment, at least a portion of the second housing 202 may protrude from the first housing 201 in the slide-out state of the electronic device 101. As the second housing 202 protrudes from the first housing 201, the overall volume of the electronic device 101 may increase. According to an embodiment, when the second housing 202 protrudes from the first housing 201, at least a portion of the second display area A2 of the display 230 may be visually exposed together with the first display area A1 to the outside of the electronic device 101.

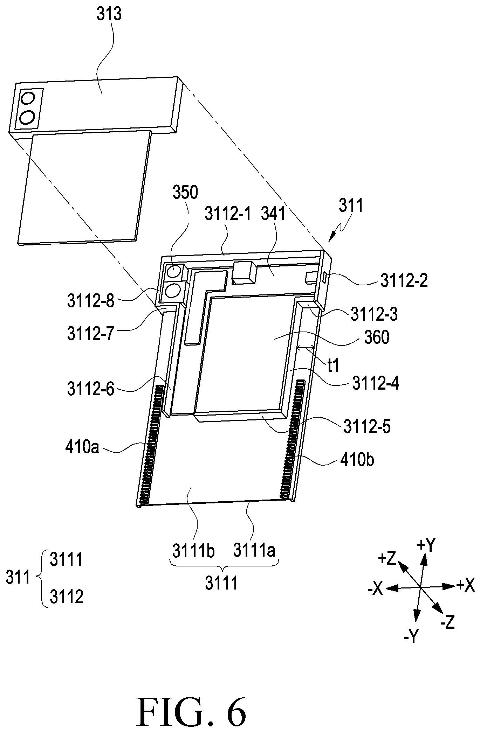

FIG. 5 is an exploded perspective view illustrating a first housing 310 according to an embodiment of the disclosure. FIG. 6 is a perspective view illustrating the first housing 310 having components built therein according to an embodiment of the disclosure.

Referring to FIGS. 5 and 6, the first housing 310 of the electronic device 101 may include a first cover member 311 and a first rear plate 313. Referring to FIGS. 5 and 6, the configurations of the first housing 310, the first cover member 311, and the first rear plate 313 may be wholly or partially the same as those of the first housing 201, the first cover member 211, and the first rear plate 213 in FIGS. 2 to 4. The structure of FIGS. 5 and 6 may be selectively combined with the structure of FIGS. 2 to 4.

According to FIGS. 5 and 6, a spatial coordinate system defined by X, Y and Z axes orthogonal to each other is illustrated. The X axis may represent a width direction of the first housing 310, the Y axis may represent a longitudinal direction of the first housing 310, and the Z axis may represent a thickness direction of the first housing 310.

According to an embodiment, the first cover member 311 may include a first front plate 3111 and a first support member 3112 extending in the thickness direction (e.g., the Z-axis direction in FIG. 5) and forming a sidewall. The first front plate 3111 and the first support member 3112 may be formed integrally, or may be formed as separate structures and coupled or assembled.

According to an embodiment, the first front plate 3111 may include a first surface 3111a and a second surface 3111b. The first surface 3111a may be disposed to face forward of the first front plate 3111 (e.g., in the -Z direction) and form at least a portion of the front surface of the electronic device 101. A display 330 may be disposed on the first surface 3111a. The second surface 3111b may be disposed to face rearward of the first front plate 3111 (e.g., in the +Z direction), and the first support member 3112 may be located on the second surface 3111b.

According to an embodiment, a first magnetic body 410 may be located on the first front plate 3111.

According to an embodiment, the first magnetic body 410 may have a bar shape extending in the longitudinal direction. The first magnetic body 410 may be located on each of edge regions in left and right directions (e.g., the +X-axis and -X-axis directions in FIG. 5) of the first housing 310. The first magnetic body 410 may include a (1-1)^{th} magnetic body 410a in the form of a bar extending in the longitudinal direction in the edge region in the left direction (e.g., the +X-axis direction in FIG. 5) of the first front plate 3111, and a (1-2)^{th} magnetic body 410b in the form of a bar extending in the longitudinal direction in the edge region in the right direction (e.g., the -X-axis direction in FIG. 5) of the first front plate 3111. The first magnetic body 410 may have a first polarity (e.g., an N pole or an S pole).

According to an embodiment, the first magnetic body 410 may be disposed in a downward direction (e.g., the -Y-axis direction in FIG. 5) of the electronic device 101.

According to an embodiment, a first groove 312 for having the first magnetic body 410 built therein may be formed in an edge portion of the second surface 3111b of the first front plate 3111. The first groove 312 may be recessed in a rearward direction (e.g., the -Z-axis direction in FIG. 5). The first groove 312 may correspond to the shape of the first magnetic body 410. The first grooves 312 may be formed in each of edge regions of left and right directions (e.g., the +X-axis and -X-axis directions in FIG. 5) of the first housing 310. The first groove 312 may include a (1-1)^{th} groove 312 formed in the longitudinal direction in the edge region in the left direction (e.g., the +X-axis direction in FIG. 5) of the first front plate 3111, and a (1-2)^{th} groove 312 formed in the longitudinal direction in the edge region in the right direction (e.g., the -X-axis direction in FIG. 5) of the first front plate 3111.

According to an embodiment, the first support member 3112 may have substantially a 'T' shape. According to an embodiment, a portion of the first support member 3112 may form a side surface of the electronic device 101.

According to an embodiment, referring to FIG. 5, the first support member 3112 may include a (1-1)^{th} support member 3112-1 extending in the width direction (e.g., the X-axis direction in FIG. 5) of the electronic device 101 and forming a side surface, a (1-2)^{th} support member 3112-2 extending in a perpendicular direction (e.g., the -Y-axis direction in FIG. 5) from the (1-1)^{th} support member 3112-1 and forming a portion of a side surface in the longitudinal direction (e.g., the Y-axis direction in FIG. 5) of the electronic device 101, a (1-3)^{th} support member 3112-3 extending in a perpendicular direction (e.g., the +X-axis direction in FIG. 5) from the (1-2)^{th} support member 3112-2 by a first length t1, a (1-4)^{th} support member 3112-4 extending in a perpendicular direction (e.g., the -Y-axis direction in FIG. 5) from the (1-3)^{th} support member 3112-3, a (1-5)^{th} support member 3112-5 extending in a perpendicular direction (e.g., the +X-axis direction in FIG. 5) from the (1-4)^{th} support member 3112-4, a (1-6)^{th} support member 3112-6 extending in a perpendicular direction (e.g., the +Y-axis direction in FIG. 5) from the (1-5)^{th} support member 3112-5, a (1-7)^{th} support member 3112-7 extending in a perpendicular direction (e.g., the +X-axis direction in FIG. 5) from the (1-6)^{th} support member 3112-6 by the first length t1, and a (1-8)^{th} support member 3112-8 extending in a perpendicular direction (e.g., the +Y-axis direction in FIG. 5) from the (1-7)^{th} support member 3112-7 and perpendicularly contacting the (1-1)^{th} support member 3112-1. The first support member 3112 may be formed integrally, or may be formed as individual separate structures and coupled or assembled.

According to an embodiment, a second waterproof member 372 to be described later may be located in at least a portion of the (1-5)^{th} support member 3112-5. The second waterproof member 372 will be described later.

According to an embodiment, components may be built in a space formed by the first support member 3112. The components that may be built therein may be, for example, a first circuit board 341, a camera module 350, and a battery 360. An FPCB 342 extending from one end of the first circuit board 341 may be further included. The FPCB 342 may electrically connect the first circuit board 341 and a second circuit board 343 to be described later.

According to an embodiment, the first rear plate 313 may correspond to the shape of the first support member 3112. The first rear plate 313 may protect the components built in the first support member 3112. According to an embodiment, the first rear plate 313 may substantially form at least a portion of the exterior of the first housing 310 or the electronic device 101. For example, the first rear plate 313 may be coupled to an outer surface of the first cover member 311. According to an embodiment, the first rear plate 313 may provide a decorative effect on the exterior of the electronic device 101. The first rear plate 313 may be made of at least one of metal, glass, synthetic resin, or ceramic.

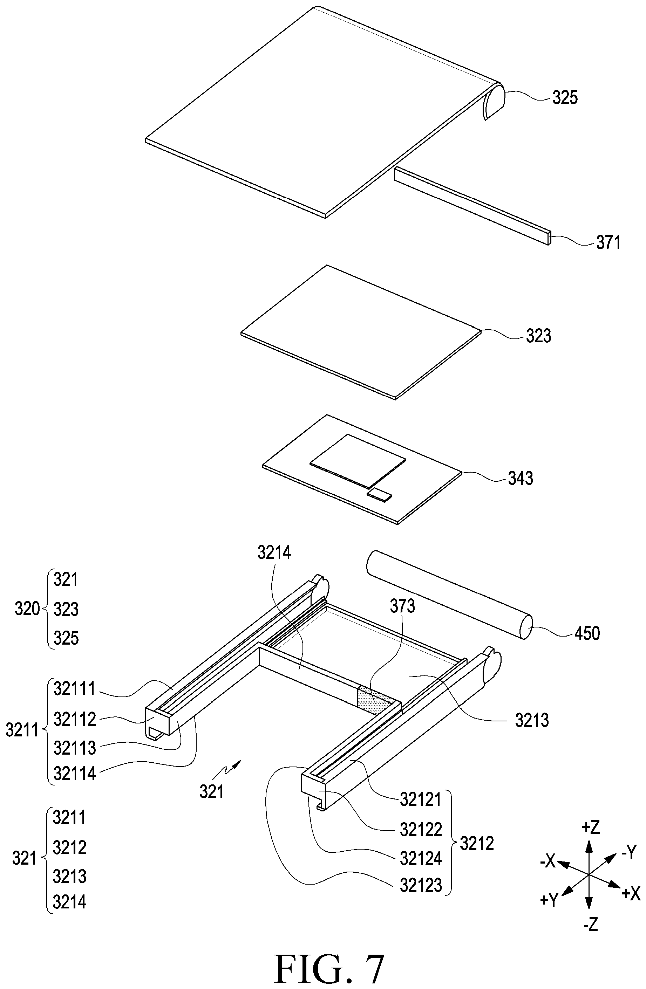

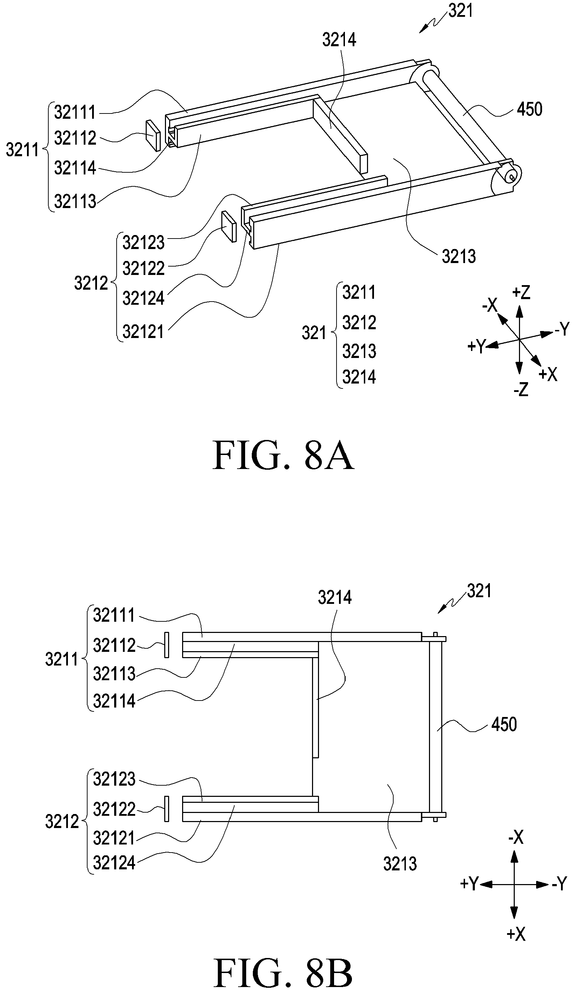

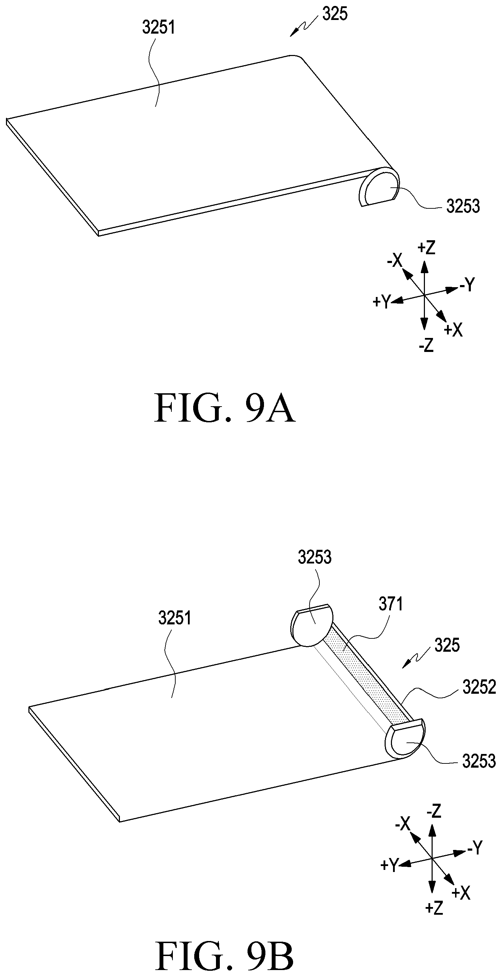

FIG. 7 is an exploded perspective view illustrating a second housing 320 according to an embodiment of the disclosure. FIGS. 8A and 8B are a perspective view and plan view 3251 illustrating a second cover member 321 according to an embodiment of the disclosure. FIGS. 9A and 9B are front and rear perspective views illustrating a second rear plate 325 according to an embodiment of the disclosure.

Referring to FIGS. 7 and 9, the second housing 320 of the electronic device 101 may include a second cover member 321, a rear cover 323, and the second rear plate 325. Referring to FIGS. 7 and 9, the configurations of the second housing 320, the second cover member 321, the rear cover 323, and the second rear plate 325 may be wholly or partially identical to those of the second housing 320, the second cover member 221, the rear cover 223, and the second rear plate 225 in FIGS. 2 to 4. The structure of FIGS. 7 and 9 may be selectively combined with the structure of FIGS. 2 to 4.

According to FIGS. 7 and 9, a spatial coordinate system defined by X, Y and Z axes orthogonal to each other is illustrated. The Y axis may represent a longitudinal direction of the second housing 320, the X axis may represent a width direction of the second housing 320, and the Z axis may represent a thickness direction of the second housing 320.

According to an embodiment, the second cover member 321 may form at least a portion of a side surface (e.g., a side surface in the longitudinal direction (e.g., the Y-axis direction in FIG. 7) of the electronic device 101, and include a guide portion that guides sliding of a plurality of gears to be described later. According to an embodiment, the guide portion may include a first guide portion 3211 located in a left direction (e.g., the -X-axis direction in FIG. 7) and formed to extend in the longitudinal direction, and a second guide portion 3212 located in a right direction (e.g., the +X-axis direction in FIG. 7) and formed to extend in the longitudinal direction. According to an embodiment, the second cover member 321 may further include a second front plate 3213 on which a component (e.g., the second circuit board 343) is mounted.

According to an embodiment, the first guide portion 3211 may include a (1-1)^{th} guide member 32111 extending in the longitudinal direction, forming at least a portion of the exterior of the electronic device 101, and disposed on an outer side thereof, a (1-2)^{th} guide member 32112 extending in a perpendicular direction (e.g., in the X-axis direction in FIG. 7) from the (1-1)^{th} guide member 32111, a (1-3)^{th} guide member 32113 extending in a perpendicular direction (e.g., the Y-axis direction in FIG. 7) from the (1-2)^{th} guide member and disposed parallel to the (1-1)^{th} guide member 32111, and a (1-4)^{th} guide member 32114 disposed perpendicular to the (1-1)^{th} guide member 32111, the (1-2)^{th} guide member 32112, and the (1-3)^{th} guide member 32113. According to an embodiment, the (1-1)^{th} guide member 32111, the (1-2)^{th} guide member 32112, the (1-3)^{th} guide member 32113, and (1-4)^{th} guide member 32114 of the first guide portion 3211 may be formed integrally. According to an embodiment, the (1-1)^{th} guide member 32111, the (1-2)^{th} guide member 32112, the (1-3)^{th} guide member 32113, and the (1-4)^{th} guide member 32114 of the first guide portion 3211 may be formed as separate structures and coupled or assembled. According to an embodiment, a plurality of gears (e.g., a first rack gear 420, a second rack gear 430, and/or a pinion gear 440) may be disposed in a space formed by the first guide portion 3211. The first guide portion 3211 may guide the sliding of the plurality of gears.

According to an embodiment, the second guide portion 3212 may include a (2-1)^{th} guide member 32121 extending in the longitudinal direction (e.g., the Y-axis direction in FIG. 7), forming at least a portion of the exterior of the electronic device 101, and disposed on an outer side thereof, a (2-2)^{th} guide member 32122 extending in a perpendicular direction (e.g., in the X-axis direction in FIG. 7) from the (2-1)^{th} guide member 32121, a (2-3)^{th} guide member 32123 extending in a perpendicular direction (e.g., the Y-axis direction in FIG. 7) from the (2-2)^{th} guide member and disposed parallel to the (2-1)^{th} guide member 32121, and a (2-4)^{th} guide member 32124 disposed perpendicular to the (2-1)^{th} guide member 32121, the (2-2)^{th} guide member 32122, and the (2-3)^{th} guide member 32123. According to an embodiment, the (2-1)^{th} guide member 32121, the (2-2)^{th} guide member 32122, the (2-3)^{th} guide member 32123, and the (2-4)^{th} guide member 32124 of the second guide portion 3212 may be formed integrally. According to an embodiment, the (2-1)^{th} guide member 32121, the (2-2)^{th} guide member 32122, the (2-3)^{th} guide member 32123, and the (2-4)^{th} guide member 32124 of the second guide portion 3212 may be formed as separate structures and coupled or assembled. According to an embodiment, a plurality of gears (e.g., the first rack gear 420, the second rack gear 430, and/or the pinion gear 440) may be disposed in a space formed by the second guide portion 3212. The second guide portion 3212 may guide the sliding of the plurality of gears.

According to an embodiment, the (1-1)^{th} guide member 32111 and the (2-1)^{th} guide member 32121 may substantially form at least a portion of the exterior of the first housing 310 or the electronic device 101. According to an embodiment, the (1-1)^{th} guide member 32111 and the (2-1)^{th} guide member 32121 may provide a decorative effect on the exterior of the electronic device 101. The (1-1)^{th} guide member 32111 and the (2-1)^{th} guide member 32121 may be made of at least one of metal, glass, synthetic resin, or ceramic.

According to an embodiment, the (1-1)^{th} guide member 32111 and the (2-1)^{th} guide member 32121 may extend in a rearward direction (e.g., the -Z-axis direction in FIG. 7) by a predetermined length, and further include portions extending in a perpendicular direction from the extended portions. The perpendicularly extended portions may extend in an inward direction of the electronic device 101. For example, the (1-1)^{th} guide member 32111 may extend in the -X-axis direction. For example, the (1-1)^{th} guide member 32111 may extend in the +X-axis direction. The display 330 may be inserted on the extended portions.

According to an embodiment, the second front plate 3213 may be disposed between the first guide portion 3211 and the second guide portion 3212. The second front plate 3213 may be located in an upward direction (e.g., the +X-direction of FIG. 7) of the second housing 320. The second cover member 321 may include a second support member 3214 perpendicularly contacting the (1-3)^{th} guide member 32113 and the (2-3)^{th} guide member 32123. According to an embodiment, a third waterproof member 373 to be described later may be located in at least a portion of the second support member 3214. The third waterproof member 373 will be described later.

According to an embodiment, the shape of the rear cover 323 may correspond to the shape of the second front plate 3213. The rear cover 323 may protect and support a component (e.g., the second circuit board 343) disposed on the second front plate 3213. For example, the rear cover 323 may be connected to the second cover member 321 and formed to surround at least a portion of the second circuit board 343. For example, the rear cover 323 may be connected to the second front plate 3213 and formed to surround the second front plate 3213.

According to an embodiment, referring to FIGS. 9A and 9B, the second rear plate 325 may correspond to the shape of a widest surface (e.g. the front surface or rear surface) of the electronic device 101. The second rear plate 325 may include a flat surface 3251, a curved surface 3252 extending in the longitudinal direction from one surface of the flat surface 3251, and third support members 3253 that perpendicularly support the curved surface 3252 on both sides of the electronic device 101.

According to an embodiment, the display 330 may slide along the flat surface 3251 and the curved surface 3252 of the second rear plate 325. The display 330 may bend along the curved surface 3252. The curved surface 3252 may be disposed in a withdrawal area where the display 330 is extended from the inside of the electronic device to the outside thereof.

According to an embodiment, a sweeper member (e.g., the sweeper member 251 in FIG. 4) may be attached to an inner side of the curved surface 3252. When the display 330 slides into the second housing 320, a foreign material such as dust and water may be blocked from the outside by the sweeper member (e.g., the sweeper member 251 in FIG. 4). The sweeper member (e.g., the sweeper member 251 in FIG. 4) may be formed of, for example, fabric or a brush. According to an embodiment, the sweeper member (e.g., the sweeper member 251 in FIG. 4) may include a waterproofing function.

According to an embodiment, a first waterproof member 371 may be attached to an inner side of the curved surface 3252. When the display 330 slides into the second housing 320, a foreign material such as dust and water may be blocked from the outside by the first waterproof member 371. According to an embodiment, the sweeper member (e.g., the sweeper member 251 in FIG. 4) and the first waterproof member 371 may have substantially the same configuration. According to an embodiment, either the sweeper member (e.g., the sweeper member 251 in FIG. 4) or the first waterproof member 371 or both the sweeper member (e.g., the sweeper member 251 in FIG. 4) and the first waterproof member 371 of FIG. 4 may be mounted on the electronic device 101.

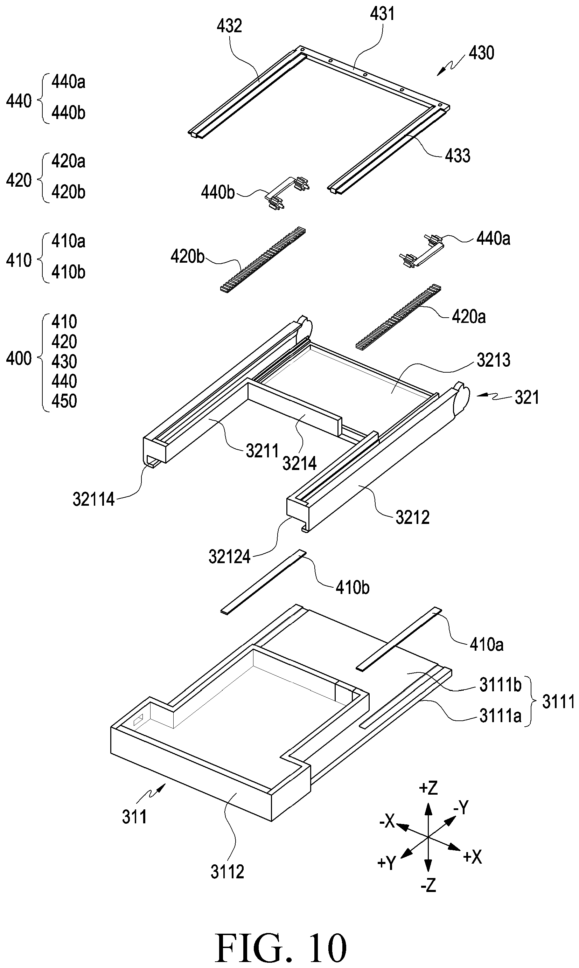

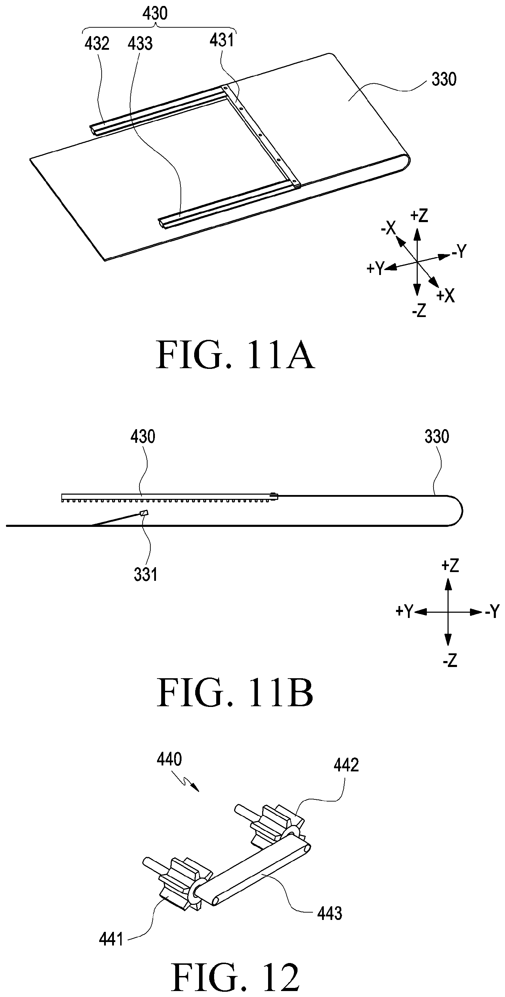

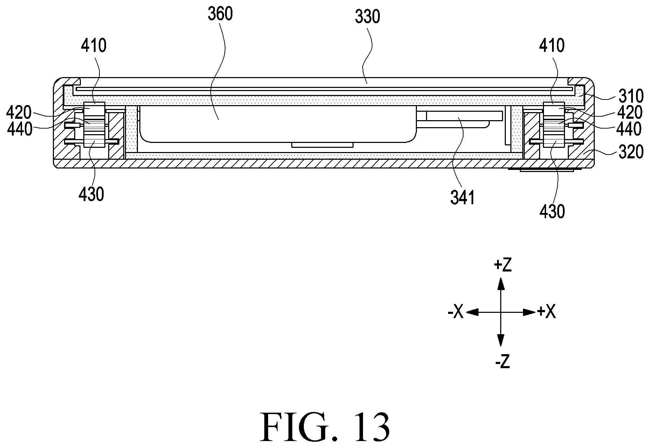

FIG. 10 is an exploded perspective view illustrating the first cover member 311, the second cover member 321, and the driving structure 400 according to an embodiment of the disclosure. FIGS. 11A and 11B are a perspective view and side view illustrating a second rack gear and display coupling structure according to an embodiment of the disclosure. FIG. 12 is a perspective view illustrating the pinion gear 440 according to an embodiment of the disclosure. FIG. 13 is a cross-sectional view of the electronic device 101, illustrating an arrangement relationship of the driving structure 400 according to an embodiment of the disclosure.

Referring to FIGS. 10 to 13, the electronic device 101 may include the first cover member 311, the second cover member 321, the display 330, and the driving structure 400. The driving structure 400 may include the first magnetic body 410, the first rack gear 420, the second rack gear 430, the pinion gear 440, and a roller 450. Referring to FIGS. 10 to 13, the configurations of the first cover member 311, the second cover member 321, the display 330, and the driving structure 400 may be wholly or partially identical to those of the first cover member 311, the second cover member 321, the display 330, and the driving structure 400 in FIGS. 7 to 9. The structure of FIGS. 10 to 13 may be selectively combined with the structure of FIGS. 7 to 9.

Referring to FIGS. 10 to 13, a spatial coordinate system defined by X, Y and Z axes orthogonal to each other is illustrated. The X axis may represent a width direction of the electronic device 101, the X axis may represent the width direction of the electronic device 101, and the Z axis may represent a thickness direction of the electronic device 101.

According to an embodiment, the first magnetic body 410 may be fixedly disposed on the first cover member 311. For example, the first magnetic body 410 may be fixedly disposed on the first front plate 3111. For example, the first magnetic body 410 may be fixedly disposed on the second surface 3111b of the first front plate 3111. According to an embodiment, the first magnetic body 410 may have a bar shape extending in the longitudinal direction (e.g., the Y-axis direction in FIG. 10). The first magnetic body 410 may be disposed in each of edge regions in the left and right directions (e.g., in the +X-axis and -X-axis directions in FIG. 10) of the first housing 310. The first magnetic body 410 may include a (1-1)^{th} magnetic body 410a extending along the longitudinal direction in the edge region in the left direction (e.g., in the +X-axis direction in FIG. 10) of the first front plate 3111, and a (1-2)^{th} magnetic body 410b extending along the longitudinal direction in the edge region in the right direction (e.g., in the -X-axis direction in FIG. 10) of the first front plate 3111. The first magnetic body 410 may have a first polarity (e.g., N pole or S pole). According to an embodiment, the first magnetic body 410 may be disposed in the downward direction (e.g., the -Y-axis direction in FIG. 10) of the electronic device 101.

According to an embodiment, the first rack gear 420 may be built in the second housing 320. The first rack gear 420 may be disposed on the second cover member 321 of the second housing 320. For example, the first rack gear 420 may be disposed in the space surrounded by the guide portion of the second housing 320. For example, the first rack gear 420 may be disposed on the (1-4)^{th} guide member (the (1-4)^{th} guide member 32114 in FIG. 7) and/or the (2-4)^{th} guide member (the (2-4)^{th} guide member 32124 in FIG. 7).

According to an embodiment, the first rack gear 420 may be disposed in each of edge regions in the left and right directions (e.g., the +X-axis and -X-axis directions in FIG. 10) of the second housing 320. The first rack gear 420 may include a (1-1)^{th} rack gear 420b in the form of a bar extending in the longitudinal direction (e.g., the Y-axis direction in FIG. 10) within the first guide portion 3211, and a (1-2)^{th} rack gear 420a in the form of a bar extending in the longitudinal direction (e.g., the Y-axis direction in FIG. 10) within the second guide portion 3212.

According to an embodiment, the first rack gear 420 may slide in engage with the pinion gear 440 to be described below. According to an embodiment, the first rack gear 420 may slide in the longitudinal direction (e.g., the Y-axis direction in FIG. 10) within the guide portion. For example, the first rack gear 420 may slide in the longitudinal direction (e.g., the Y-axis direction in FIG. 10) along a slit formed in the guide portion.

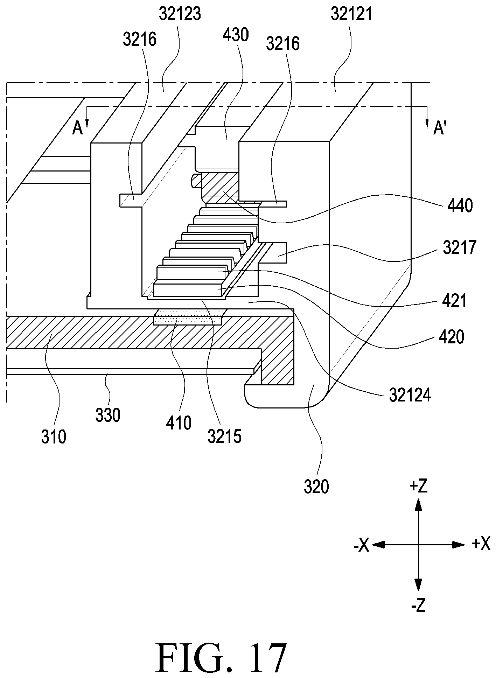

According to an embodiment, the first rack gear 420 may include a second magnetic body (e.g., a second magnetic body 421 in FIG. 17) having a polarity opposite to the first magnetic body 410. According to an embodiment, the first rack gear 420 may face the first magnetic body 410. According to an embodiment, the first rack gear 420 may be formed integrally with the second magnetic body (e.g., the second magnetic body 421 in FIG. 17). According to an embodiment, the first rack gear 420 and the second magnetic body 421 may be formed as separate structures and coupled or assembled.

According to an embodiment, even though the second housing 320 slides in a first direction (e.g., the Y-axis direction) by a magnetic attractive force between the first magnetic body 410 and the first rack gear 420 including the second magnetic body 421, the first rack gear 420 may remain at the same position. When the second housing 320 slides in the first direction by a magnetic attractive force between the first magnetic body 410 and the first rack gear 420 including the second magnetic body 421, the second housing 320 may not move in response to the sliding of the second housing 320. When the second housing 320 slides in the first direction, the first rack gear 420 may slide in a second direction opposite to the first direction, which is the sliding direction of the second housing 320, with respect to the second housing 320.

According to a comparative example of a general electronic device, the first rack gear may be fixedly disposed in the first housing. In the general electronic device, the first rack gear and the pinion gear may be disposed in separate housings, respectively. In this case, a slide hole for sliding movement may be formed on the rear surface of the second housing so that the first rack gear located in the first housing and the pinion gear located in the second housing may engage with each other. For example, the slide hole for sliding movement may be formed in the (1-4)^{th} guide member and/or the (2-4)^{th} guide member. The rigidity of the second housing may be reduced due to the slide hole, a foreign material may be introduced through the slide hole, or the first rack gear and/or the pinion gear may be damaged.

According to an embodiment of the disclosure, since the first rack gear 420 is disposed in the second housing 320, it may engage with the pinion gear 440 even without forming a slide hole for sliding movement on the rear surface of the second housing 320. Since the slide hole is not formed on the second housing 320, the strength of the second housing 320 increases, and each of the first housing 310 and the second housing 320 is sealed, which may be advantageous in blocking a foreign material from entering and in waterproofing. Transfer of a force of the rack gear through the magnet may attenuate damage from external impact, compared to direct force transfer between gears.

According to an embodiment, the second rack gear 430 may be built in the second housing 320. The second rack gear 430 may be disposed on the second cover member 321 of the second housing 320. For example, a portion of the second rack gear 430 may be disposed in the space surrounded by the guide portion of the second housing 320. For example, a portion of the second rack gear 430 may be disposed on the (1-4)^{th} guide member 32114 and/or the (2-4)^{th} guide member 32124.

According to an embodiment, referring to FIGS. 11A and 11B, the second rack gear 430 may include a fourth support member 431 connected to the display 330, a (2-1)^{th} rack gear 432 in the form of a bar extending perpendicularly from the fourth support member 431 in the longitudinal direction (e.g., the Y-axis direction in FIG. 10) within the first guide portion 3211, and a (2-2)^{th} rack gear 433 in the form of a bar extending perpendicularly from the (2-1)^{th} rack gear 432 in the longitudinal direction (e.g., the Y-axis direction in FIG. 10) within the second guide portion 3212. The (2-1)^{th} rack gear 432 and the (2-2)^{th} rack gear 433 may be substantially parallel to each other. The (2-1)^{th} rack gear 432, the (2-2)^{th} rack gear 433, and the fourth support member 431 of the second rack gear 430 may be formed integrally. The (2-1)^{th} rack gear 432, the (2-2)^{th} rack gear 433, and the fourth support member 431 of the second rack gear 430 may be formed as separate structures and coupled or assembled. According to an embodiment, the (2-2)^{th} rack gear 433 and the (2-1)^{th} rack gear 432 may be disposed parallel to the first rack gear 420 and/or the first magnetic body 410.

According to an embodiment, the second rack gear 430 may slide in the longitudinal direction (e.g., the Y-axis direction in FIG. 10) within the guide portion. For example, the second rack gear 430 may slide in the longitudinal direction (e.g., the Y-axis direction in FIG. 10) along the slit formed in the guide portion. According to an embodiment, the second rack gear 430 may slide in engage with the pinion gear 440 to be described later. For example, the (2-2)^{th} rack gear 433 and the (2-1)^{th} rack gear 432 may slide in engage with the pinion gear 440 to be described later.

According to an embodiment, the fourth support member 431 of the second rack gear 430 may be coupled to one end of the display 330 and slide in response to the sliding of the display 330. According to an embodiment, the fourth support member 431 of the second rack gear 430 may be connected to the second display area (e.g., the second display area A2 in FIG. 3) of the display 330. In an embodiment, the display 330 may slide in and/or out in response to the sliding of the second rack gear 430. For example, the second display area A2 of the display 330 may be closed and/or opened in response to the sliding of the second rack gear 430. In an embodiment, referring to FIG. 11B, the first display area (e.g., the second display area A1 in FIG. 3) of the display 330 may be electrically connected to a connector 331 through an FPCB.

In an embodiment, the pinion gear 440 may be embedded in the second housing 320. The pinion gear 440 may be disposed on the second cover member 321 of the second housing 320. For example, the pinion gear 440 may be disposed in the space surrounded by the guide portion of the second housing 320. For example, the pinion gear 440 may be disposed on the (1-4)^{th} guide member 32114 and/or the (2-4)^{th} guide member 32124. According to an embodiment, a Y-axis position of the pinion gear 440 may be fixed within the second housing 320.

According to an embodiment, the pinion gear 440 may be disposed in each of the edge regions in the left and right directions (e.g., the +X-axis and -X-axis directions in FIG. 10) of the second housing 320. The pinion gear 440 may include a first pinion gear 440b disposed within the first guide portion 3211, and a second pinion gear 440a disposed within the second guide portion 3212.

According to an embodiment, referring to FIG. 12, the pinion gear 440 may include a plurality of gears to secure balance and rigidity during a rotational motion. For example, it may include two gears. The pinion gear 440 may include a (1-1)^{th} pinion gear 441, a (1-2)^{th} pinion gear 442 spaced apart from the (1-1)^{th} pinion gear 441, and a connecting member 443 connecting central axes of the (1-1)^{th} pinion gear 441 and the (1-2)^{th} pinion gear 442. The (1-1)^{th} pinion gear 441 and the (1-2)^{th} pinion gear 442 may have substantially the same shape and structure.

According to an embodiment, the pinion gear 440 may be disposed between the first rack gear 420 and the second rack gear 430 and configured to engage with the first rack gear 420 and the second rack gear 430. According to an embodiment, a gear ratio between the pinion gear 440 and the first rack gear 420 may be 1:1. A gear ratio between the pinion gear 440 and the second rack gear 430 may be 1:1. For example, a gear ratio between the first rack gear 420 and the second rack gear 430 that engage with the pinion gear 440 may be 1:1. Accordingly, a distance by which the first rack gear 420 slides and a distance by which the second rack gear 430 slides may correspond to each other. The distance by which the first rack gear 420 slides and the distance by which the second rack gear 430 slides may be substantially equal. According to an embodiment, when the second housing 320 slides with respect to the first housing 310, a length by which the second display area extends on the front surface of the electronic device 101 and a length by which the second display area contracts on the rear surface of the electronic device 101 may be substantially equal. According to an embodiment, Y-axis positions of the pinion gear 440 and the roller 450 described below are fixed on the second housing 320, so that movement distances of the pinion gear 440 and the roller 450 may be equal.

According to an embodiment, referring to FIG. 13, the first rack gear 420, the pinion gear 440, and the second rack gear 430 may be disposed in a stacked manner.

According to an embodiment, the roller 450 guiding the movement of the display 330 may be rotatably coupled to the second housing 320. The roller 450 may be coupled to one end of the second support member 3214. According to an embodiment, a Y-axis position of the roller 450 may be fixed with respect to the second support member 3214. The roller 450 may be connected to one end of the display 330. The roller 450 may be connected to an inner surface of the second display area of the display 330. The second display area of the display 330 may be bent by the roller 450.

According to an embodiment, as the second housing 320 slides, the roller structure 249 may rotate in a direction corresponding to a movement direction of the second housing 320. For example, in the case where the second housing 320 is changed from the slide-in state to the slide-out state, when the second housing 320 slides in the first direction with respect to the first housing 310, the roller 450 may rotate in a first rotational direction (e.g., clockwise) c1. For example, in the case where the second housing 320 is changed from the slide-out state to the slide-in state, when the second housing 320 slides in the second direction with respect to the first housing 310, the roller 450 may rotate in a second rotational direction (e.g., counterclockwise) c2 opposite to the first rotational direction.

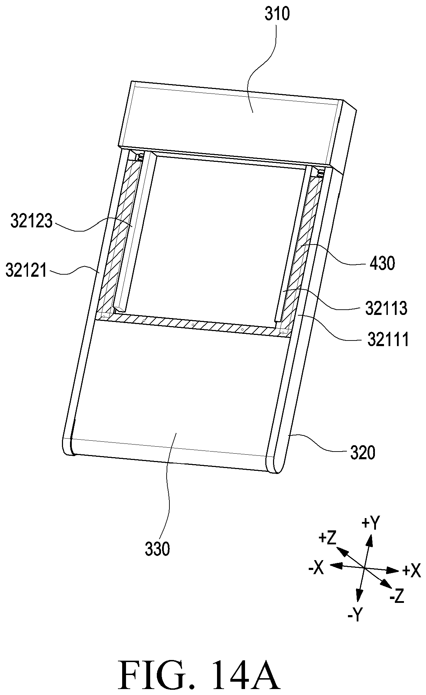

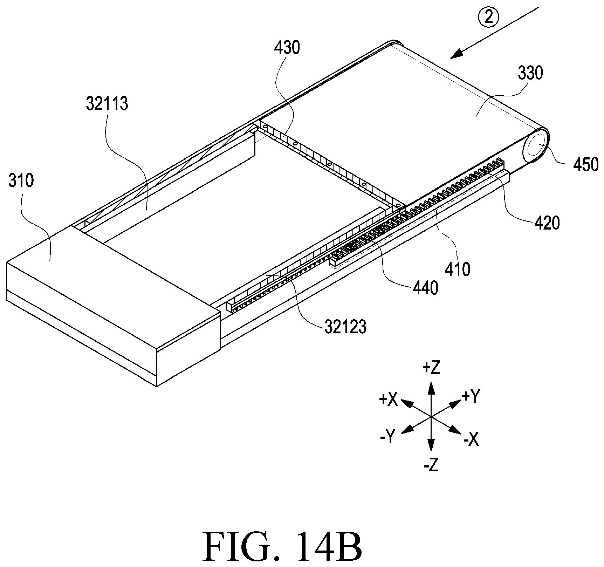

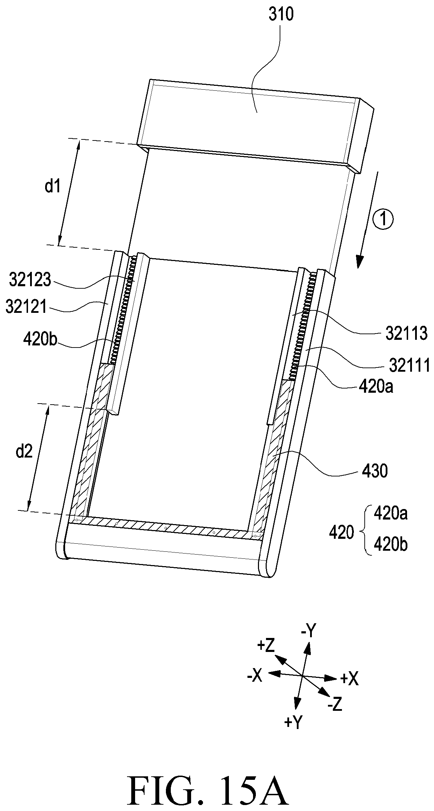

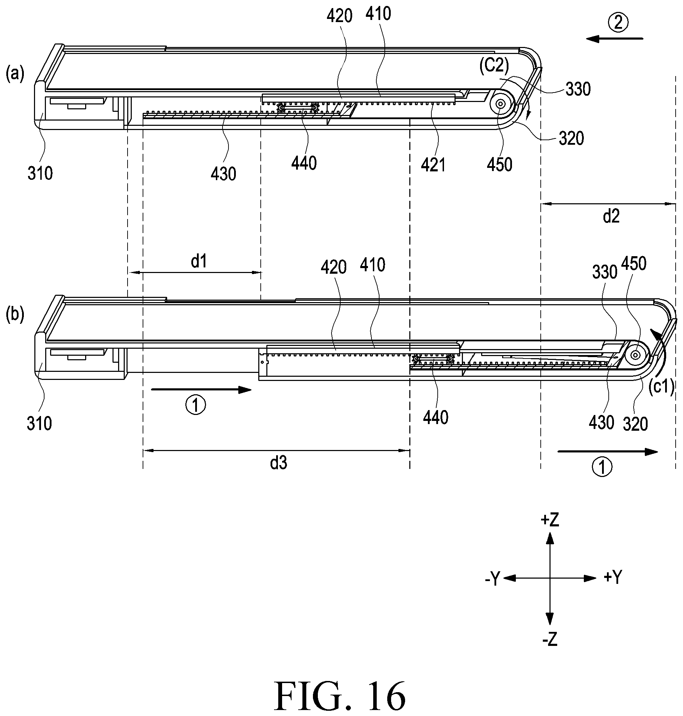

FIGS. 14A and 14B are perspective views illustrating a state in which the second display area of the display 330 is accommodated in a housing according to an embodiment of the disclosure. FIGS. 15A and 15A are perspective views illustrating a state in which the second display area of thea display 330 is exposed to the outside of the housing according to an embodiment of the disclosure. FIG. 16 is a side perspective view comparing the state in which the second display area of the display 330 is accommodated in the housing with the state in which the second display area of the display 330 is exposed to the outside of the housing according to an embodiment of the disclosure.

Referring to FIGS. 14A to 16, the electronic device 101 may include the first housing 310, the second housing 320, the display 330, and the driving structure 400. The driving structure 400 may include the first magnetic body 410, the first rack gear 420, the second rack gear 430, the pinion gear 440, and the roller 450. Referring to FIGS. 14A to 16, the configurations of the first housing 310, the second housing 320, the display 330, and the driving structure 400 may be wholly or partially the same as those of the first housing 310, the second housing 320, the display 330, and the drive structure 400 in FIGS. 2 to 4. The structure of FIGS. 14A to 16 may be selectively combined with the structure of FIGS. 2 to 4.

Referring to FIGS. 14A to 16, a spatial coordinate system defined by X, Y and Z axes orthogonal to each other is illustrated. The X axis may represent the width direction of the electronic device 101, the X axis may represent the width direction of the electronic device 101, and the Z axis may represent the thickness direction of the electronic device 101.

According to an embodiment, in the case where the second housing 320 is changed from the slide-in state to the slide-out state with respect to the first housing 310, when the second housing 320 slides with respect to the first housing 310 in a first direction (e.g., a first direction ① in FIG. 15A), a double slide structure may be formed in which the second rack gear 430 slides in the first direction (e.g., the first direction ① in FIG. 15A) within the second housing 320. The sliding of the second housing 320 and the sliding of the second rack gear 430 may be performed simultaneously rather than stepwise.

According to an embodiment, the pinion gear 440 and the roller 450 may move in response to the sliding of the second housing 320. For example, the positions of the pinion gear 440 and the roller 450 with respect to the second housing 320 may not change. According to an embodiment, when the second housing 320 slides in the first direction (e.g., the first direction ① in FIG. 15A) with respect to the first housing 310, the roller 450 disposed with its Y-axis position fixed within the second housing 320 may move in the first direction (e.g., the first direction ① in FIG. 15A). According to an embodiment, when the second housing 320 slides with respect to the first housing 310 in the first direction (e.g., the first direction ① in FIG. 15A), the pinion gear 440 disposed with its Y-axis position fixed within the second housing 320 may move in the first direction (e.g., the first direction ① in FIG. 15A).

According to an embodiment, as the second housing 320 slides with respect to the first housing 310, the roller 450 may rotate in a direction corresponding to a movement direction of the second housing 320. For example, in the case where the second housing 320 is changed from the slide-in state to the slide-out state, when the second housing 320 slides in the first direction (e.g., the first direction ① in FIG. 15A) with respect to the first housing 310, the roller 450 may rotate in a second rotational direction (e.g., clockwise) (e.g., a second rotational direction c2 in FIG. 16). For example, in the case where the second housing 320 is changed from the slide-out state to the slide-in state, when the second housing 320 slides with respect to the first housing 310 in a second direction (e.g., a second direction ② in FIG. 16), the roller 450 may rotate in a first rotational direction (e.g., counterclockwise) (e.g., the first rotational direction c1 in **FIG.** 16) opposite to the second rotational direction.

According to an embodiment, as the second housing 320 slides with respect to the first housing 310, the pinion gear 440 may rotate in a direction corresponding to a movement direction of the second housing 320. For example, in the case where the second housing 320 is changed from the slide-in state to the slide-out state, when the second housing 320 slides in the first direction (e.g., the first direction ① in FIG. 15A) with respect to the first housing 310, the pinion gear 440 may rotate in the first rotational direction (e.g., counterclockwise) (e.g., the first rotational direction c1 in FIG. 16). For example, in the case where the second housing 320 is changed from the slide-out state to the slide-in state, when the second housing 320 slides in the second direction (e.g., the second direction ② in FIG. 16) with respect to the first housing 310, the pinion gear 440 may rotate in the second rotational direction (e.g., clockwise) (e.g., the second rotational direction c2 in FIG. 16) opposite to the first rotational direction.

According to an embodiment, when the second housing 320 slides with respect to the first housing 310, the position of the first rack gear 420 including the second magnetic body 421 may not move due to an attractive force with the first magnetic body 410. According to an embodiment, when the second housing 320 slides with respect to the first housing 310, the first rack gear 420 may move in the second direction (e.g., the second direction ② in FIG. 16) opposite to the first direction with respect to the second housing 320 by magnetism.

According to an embodiment, the second display area of the display 330 may slide according to the sliding of the second housing 320 with respect to the first housing 310 and the rotational movement of the roller 450. According to an embodiment, as the second housing 320 slides with respect to the first housing 310 in the first direction ①, and the roller 450 rotates in the first rotational direction c1, the second display area and the second rack gear 430 connected to it may receive a force in the first direction ① and slide in the first direction ①.

According to an embodiment, as the second housing 320 slides with respect to the first housing 310, and the pinion gear 440 rotates, the second display area of the display 330 and the second rack gear 430 connected to it may slide. According to an embodiment, as the second housing 320 slides with respect to the first housing 310 in the first direction ①, and the pinion gear 440 rotates in the first rotational direction c1, the second display area and the second rack gear 430 connected to it may receive a force in the first direction ① and slide in the first direction ①.

According to an embodiment, a force by the sliding of the second housing 320 with respect to the first housing 310 may be entirely used to move the display 330 through the driving of the first rack gear 420, the pinion gear 440, and the second rack gear 430, thereby minimizing a force and/or pressure (e.g., lateral pressure and/or tension) applied to the display 330 and the roller 450.

According to an embodiment, when the second display area moves in the first direction ① according to the sliding of the second housing 320 with respect to the first housing 310 in the first direction ①, a front portion of the second display area may be pulled in the first direction ① by the rotational movement of the roller 450, and an end portion of the second display area may be pushed in the first direction ① by the sliding of the second rack gear 430, so that a force and/or pressure (e.g., lateral pressure and/or tension) applied to the display 330 may be offset.

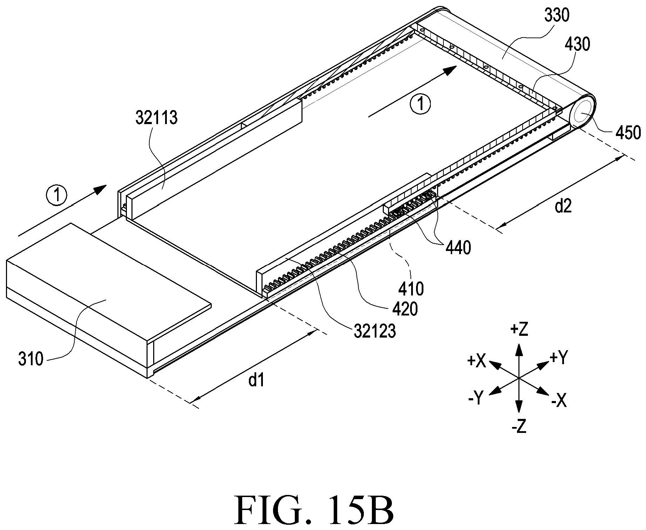

According to an embodiment, when the second housing 320 slides in the first direction ① with respect to the first housing 310 by a first length (e.g., a first length d1 in FIG. 15B), the roller 450 and the pinion gear 440 disposed with their Y-axis positions fixed within the second housing 320 may move in the first direction ① by a second length (e.g., a second length d2 in FIG. 15B). The first length d1 and the second length d2 may be substantially equal.

According to an embodiment, when the second housing 320 slides in the first direction ① with respect to the first housing 310 by the first length d1, the position of the first rack gear 420 mounted within the second housing 320 may not change due to magnetism.

According to an embodiment, when the second housing 320 slides in the first direction ① with respect to the first housing 310 by the first length d1, the second rack gear 430 mounted in the second housing 320 may move in the first direction ① by a third length (e.g., a third length d3 in FIG. 16) twice the first length.

According to an embodiment, when the second housing 320 slides in the first direction ① with respect to the first housing 310, a length by which the second display area extends on the front surface of the electronic device 101 and a length by which the second display area contracts on the rear surface of the electronic device 101 may be substantially equal. According to an embodiment, when the second housing 320 slides in the first direction ① with respect to the first housing 310 by the first length, the length by which the second display area extends on the front surface of the electronic device 101 and the length by which the second display area contracts on the rear surface of the electronic device 101 may be the first length d1. Since the length by which the second display area extends and the length by which the second display area contracts are equal, a force and/or pressure (e.g., lateral pressure and/or tension) applied to the display 330 during the slide-in/out operation of the second housing 320 may be reduced.

According to an embodiment, when the second housing 320 slides, the movement direction of the display 330 and the rotational direction of the roller 450 and/or the pinion gear 440 substantially correspond to each other, so that pressure of the display 330 applied to the roller 450 may be minimized. According to an embodiment, a force by the sliding of the second housing 320 with respect to the first housing 310 may be used to pull the display 330 in the movement direction through the rotational movement of the roller 450, and the display 330 may be pushed in the movement direction by the sliding of the second rack gear 430, so that pressure applied to the display 330 may be offset.

According to an embodiment, when the second housing 320 slides with respect to the first housing 310, a force and/or pressure (e.g., lateral pressure and/or tension) applied to the display 330 may be minimized, thereby enabling design of a structure without a motor and/or a multi-bar.

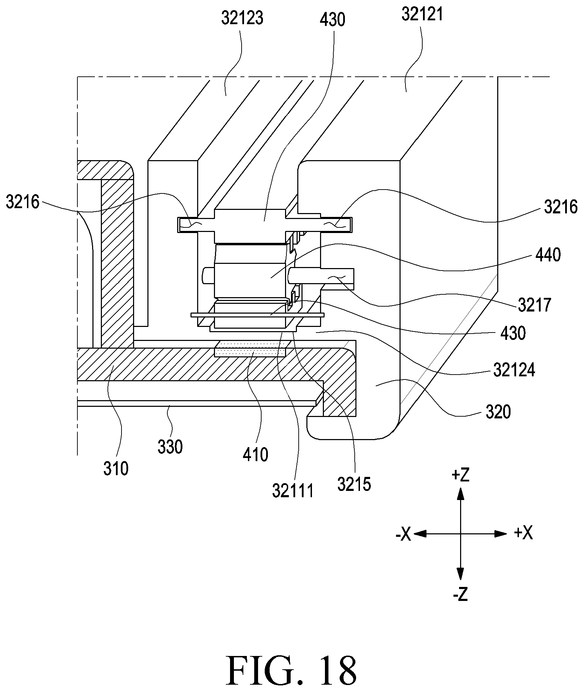

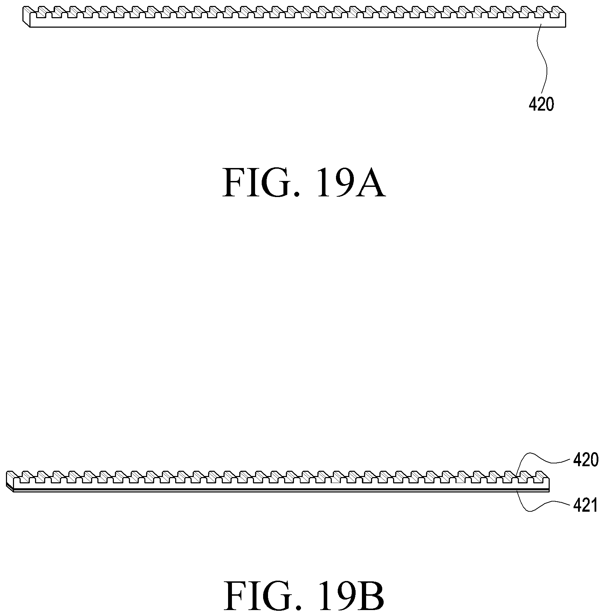

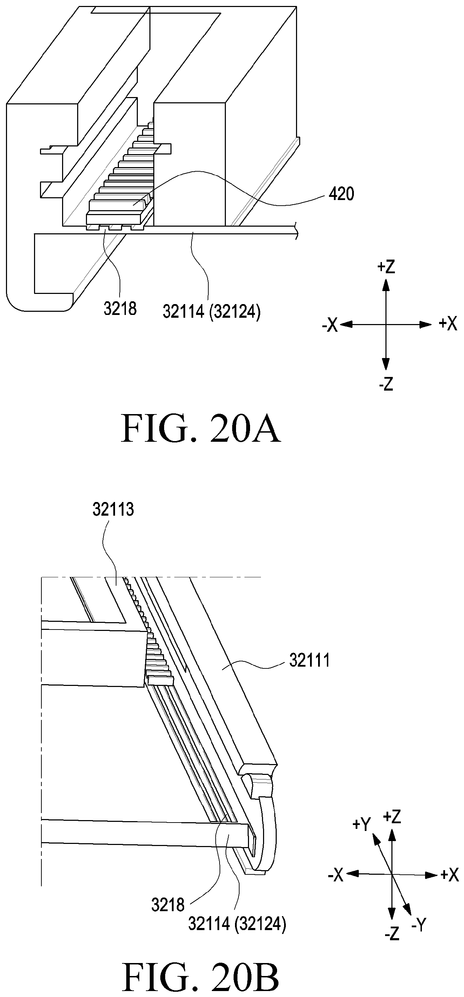

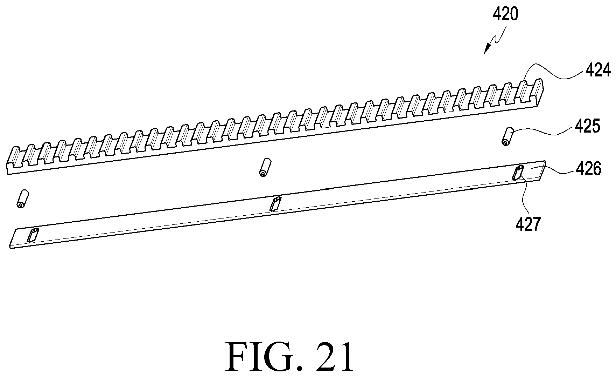

FIG. 17 is a diagram illustrating an arrangement relationship between the driving structure 400 and a housing according to an embodiment of the disclosure. FIG. 18 is a diagram illustrating a cross-section taken along line A-A' of FIG. 17 according to an embodiment of the disclosure. FIGS. 19A and 19B are diagrams illustrating the first rack gear 420 according to an embodiment of the disclosure. FIGS. 20A and 20B are diagrams illustrating the second housing 320 having a concave-convex structure formed thereon according to an embodiment of the disclosure. FIG. 21 is a diagram illustrating the first rack gear 420 including a bearing member according to an embodiment of the disclosure.

Referring to FIGS. 17 to 21, the electronic device 101 may include the first housing 310, the second housing 320, the display 330, and the driving structure 400. The driving structure 400 may include the first magnetic body 410, the first rack gear 420, the second rack gear 430, the pinion gear 440, and the roller 450. Referring to FIGS. 17 to 21, the configurations of the first housing 310, the second housing 320, the display 330, and the driving structure 400 may be wholly or partially the same as those of the first housing 310, the second housing 320, the display 330, and the driving structure 400 in FIGS. 2 to 4. The structure of FIGS. 17 to 21 may be optionally combined with the structure of FIGS. 14A to 16.

Referring to FIGS. 17 to 21, a spatial coordinate system defined by X, Y and Z axes orthogonal to each other is illustrated. The X axis may represent the width direction of the electronic device 101, the X axis may represent the width direction of the electronic device 101, and the Z axis may represent the thickness direction of the electronic device 101.

According to a comparative example of a general electronic device, the first rack gear may be fixedly disposed in the first housing. In the general electronic device, the first rack gear and the pinion gear may be disposed in separate housings, respectively. In this case, a slide hole for sliding movement may be formed on the rear surface of the second housing so that the first rack gear located in the first housing and the pinion gear located in the second housing may engage with each other. For example, a slide hole 3215 for sliding movement may be formed in the (1-4)^{th} guide member and/or the (2-4)^{th} guide member. The rigidity of the second housing may be reduced due to the slide hole 3215, a foreign material may be introduced through the slide hole 3215, or the first rack gear and/or the pinion gear may be damaged.

According to an embodiment of the disclosure, the first rack gear 420 may be built in the second housing 320. The first rack gear 420 may be disposed on the second cover 321 of the second housing 320. For example, the first rack gear 420 may be disposed in the space surrounded by the guide portion of the second housing 320. For example, the first rack gear 420 may be disposed on the (1-4)^{th} guide member 32114 and/or the (2-4)^{th} guide member 32124.

According to an embodiment of the disclosure, since the first rack gear 420 is disposed on the second housing 320, it may engage with the pinion gear 440 even without forming a slide hole disposed under the second housing, for sliding movement. Since the slide hole is not formed on the second housing 320, the strength of the second housing 320 increases, and each of the first housing 310 and the second housing 320 is sealed, which may be advantageous in blocking a foreign material from entering and in waterproofing. Transfer of a force of the rack gear through the magnet may attenuate damage from external impact, compared to direct force transfer between gears.

According to an embodiment, the first magnetic body 410 may be disposed on the first housing 310. According to an embodiment, it may be fixedly disposed on the first cover member 311. For example, the first magnetic body 410 may be fixedly disposed on the first front plate 3111. For example, the first magnetic body 410 may be fixedly disposed on the second surface 3111b of the first front plate 3111.

According to an embodiment, referring to FIG. 19, according to an embodiment, the first rack gear 420 may include the second magnetic body 421 having an opposite polarity to the first magnetic body 410. In an embodiment, the first rack gear 420 may face the first magnetic body 410. In an embodiment, referring to FIG. 19A, the first rack gear 420 may be formed integrally with the second magnetic body 421. In an embodiment, referring to FIG. 19B, the first rack gear 420 and the second magnetic body 421 may be formed as separate structures and coupled or assembled.

In an embodiment, the first rack gear 420 may slide along a first slit formed in the guide portion. The first slit 3215 may be referred to as a groove or recess formed in the (1-4)^{th} guide member 32114 and/or the (2-4)^{th} guide member 32124. The first slit 3215 may be recessed in a front direction (e.g., +Z direction in FIG. 17) in the (1-4)^{th} guide member 32114 and/or the (2-4)^{th} guide member 32124. The first slit 3215 may be recessed long in the longitudinal direction.

According to an embodiment, the second rack gear 430 may slide along a second slit 3216 formed in the guide portion. The second slit 3216 may be referred to as a groove or recess formed in the (1-1)^{th} guide member 32111, the (1-2)^{th} guide member 32112, the (2-1)^{th} guide member 32121, and/or the (2-2)^{th} guide member 32122. The second slit 3216 may be recessed in a lateral direction (e.g., the X direction in FIG. 17) in the (1-1)^{th} guide member 32111, the (1-2)^{th} guide member 32112, the (2-1)^{th} guide member 32121, and/or the (2-2)^{th} guide member 32122. The second slit 3216 may be recessed long in the longitudinal direction.

According to an embodiment, referring to FIG. 18, the position of the pinion gear 440 may be fixed by a third slit 3217 formed in the guide portion. A bar forming a central axis of the pinion gear 440 may be inserted into the third slit 3217. The third slit 3217 may be referred to as a groove or recess formed in the (1-1)^{th} guide member 32111, the (1-2)^{th} guide member 32112, the (2-1)^{th} guide member 32121, and/or the (2-2)^{th} guide member 32122. The third slit 3217 may have a shape recessed in the lateral direction (e.g., the X direction in FIG. 17) in the (1-1)^{th} guide member 32111, the (1-2)^{th} guide member 32112, the (2-1)^{th} guide member 32121, and/or the (2-2)^{th} guide member 32122.

According to an embodiment, the first rack gear 420 may slide in a second direction (e.g., the second direction ② in FIG. 16) opposite to a first direction, which is the sliding direction of the second housing 320, by a magnetic attractive force between the first rack gear 420 and the first magnetic body 410 within the second housing 320. According to an embodiment, referring to FIGS. 20A and 20B, to prevent friction from occurring between the first rack gear 420 and the second housing 320 as the first rack gear 420 slides in the second direction (e.g., the second direction ② in FIG. 16), a concave-convex structure 3218 may be formed on a portion of the second housing 320. For example, the concave-convex structure 3218 may be formed on the (1-4)^{th} guide member 32114 and/or the (2-4)^{th} guide member 32124 that contacts the first rack gear 420. As the concave-convex structure 3218 is formed, a contact area where frictional force is generated is reduced, and the first rack gear 420 may slide smoothly.

According to an embodiment, referring to FIG. 21, to prevent friction from occurring between the first rack gear 420 and the second housing 320 as the first rack gear 420 slides in the second direction (e.g., the second direction ② in FIG. 16), the first rack gear 420 may further include a bearing member 425. According to an embodiment, the first rack gear 420 may include a rack 424, a plurality of bearing members 425 formed on the bottom of the rack, and/or a plate 426 including holes corresponding to the bearing members 425. For example, three bearing members 425 may be formed at left, right, and middle portions in the longitudinal direction. For example, the plate 426 may form holes 427 having a width smaller than the diameter of the plurality of bearing members 425 at positions corresponding to the bearing members 425. The plate 426 may be fixedly disposed in the second housing 320. The plate 426 may be formed integrally with the second housing 320, or may be formed as a separate structure and coupled or assembled to the second housing 320. When the first rack gear 420 slides, the plurality of bearing members 425 may rotate, thereby reducing a frictional force between the second housing 320 and the first rack gear 420.

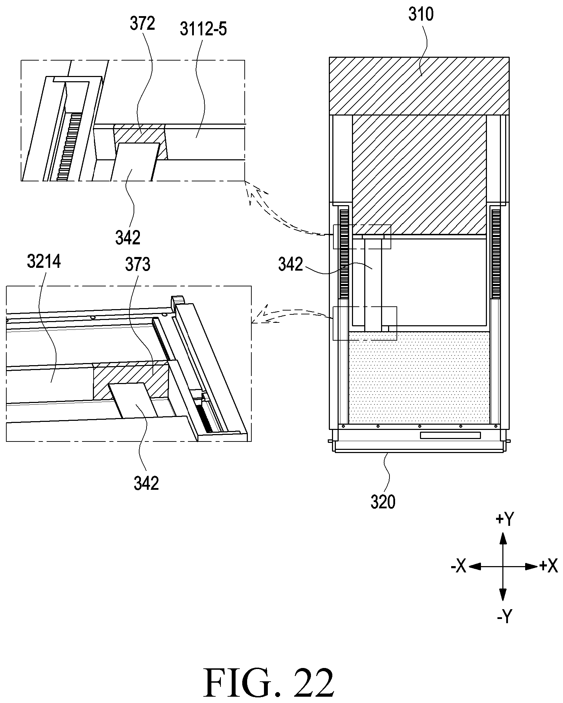

FIG. 22 is a diagram illustrating the electronic device 101 including the waterproof members 372 and 373 according to an embodiment of the disclosure.

Referring to FIG. 22, the electronic device 101 may include the first housing 310, the second housing 320, the display 330, and the driving structure 400. The driving structure 400 may include the first magnetic body 410, the first rack gear 420, the second rack gear 430, the pinion gear 440, and the roller 450. Referring to FIG. 22, the configurations of the first housing 310, the second housing 320, the display 330, and the driving structure 400 may be wholly or partially the same as those of the first housing 310, the second housing 320, the display 330, and the driving structure 400 in FIGS. 2 to 4. The structure of FIG. 22 may be selectively combined with the structure of FIGS. 17 to 21.

Referring to FIG. 22, a spatial coordinate system defined by X, Y and Z axes orthogonal to each other is illustrated. The X axis may represent the width direction of the electronic device 101, the X axis may represent the width direction of the electronic device 101, and the Z axis may represent the thickness direction of the electronic device 101.

According to an embodiment, the electronic device 101 may include the waterproof members 371, 372, and 373 to prevent the introduction of a foreign material as the display 330 slides and to provide a waterproof design.

According to an embodiment, the second rear plate 325 of the second housing 320 may include a first waterproof member (e.g., the first waterproof member 371 in FIG. 9B). According to an embodiment, the display 330 may slide along a flat surface (e.g., the flat surface 3251 in FIG. 9B) or a curved surface (e.g., the curved surface 3252 in FIG. 9B) of the second rear plate 325 of the second housing 320. The display 330 may bend along the curved surface 3252. According to an embodiment, the first waterproof member 371 may be attached to the inner side of the curved surface 3252. When the display 330 slides into the second housing 320, a foreign material such as dust and water from the outside may be blocked by the first waterproof member.

According to an embodiment, the first support member 3112 of the first housing 310 may include the second waterproof member 372. According to an embodiment, the second waterproof member 372 may be located in at least a portion of a (1-5)^{th} support member 3112-5. For example, the second waterproof member 372 may be disposed in a portion of the (1-5)^{th} support member 3112-5 of the first support member 3112, through which the FPCB 342 passes.

According to an embodiment, the second support member 3214 of the second housing 320 may include the third waterproof member 373. According to an embodiment, the third waterproof member 373 may be located in at least a portion of the second support member 3214. For example, the third waterproof member 373 may be located in a portion of the second support member 3214, through which the FPCB 342 passes.

An electronic device (e.g., a portable terminal) may include a display having a flat surface or flat and curved surfaces. An electronic device including a display may have limitations in implementing a screen larger than the size of the electronic device due to the fixed structure of the display. Therefore, an electronic device including a rollable display is being studied.

In an electronic device including a rollable display, the area of a display area of the display and/or a portion of the electronic device may be increased or decreased, when a slide operation is implemented.

An electronic device including a rollable display may be provided with a driving structure including a motor and a gear structure to implement a sliding operation. A mechanism is generally used in which one end of the display is fixed and the other end thereof is movable, the housing is moved and extended by a motor or human force, and the display that was rolled up is released accordingly to extend the display. In this structure, when the display is extended or contracted, direct lateral pressure or tension is applied to the display, which has a significant impact on the durability of the display, and damage such as display scratches may occur when the display is inserted.

An electronic device according to various embodiments of the disclosure may be a structure that reduces a compressive and/or tensile force applied to the display, when the display extends and/or contracts, and is advantageous in waterproofing and preventing a foreign material.

However, the problem to be solved in the disclosure is not limited to the problem mentioned above, and may be determined in various ways without departing from the scope of the disclosure.

An electronic device according to an embodiment of the disclosure may include a first housing (310 in FIG. 5), a second housing (320 in FIG. 7) configured to slide with respect to the first housing, a display (330 in FIG. 11A) including a first display area disposed on the first housing and a second display area extending from the first display area, wherein at least a portion of the second display area is configured to bend based on the sliding of the second housing, and a driving structure (400 in FIG. 10) configured to provide a driving force for the sliding of the second housing with respect to the first housing. The driving structure may include a first magnetic body (410 in FIG. 10) fixedly disposed on the first housing, a first rack gear (420 in FIG. 10) disposed in the second housing, facing the first magnetic body, and including a second magnetic body (421 in FIG. 17) having a polarity opposite to a polarity of the first magnetic body, a second rack gear (430 in FIG. 10) disposed at least partially parallel to the first rack gear within the second housing and connected to the second display area, and a pinion gear (440 in FIG. 10) disposed between the first rack gear and the second rack gear and configured to engage with both the first rack gear and the second rack gear. When the second housing slides in a first direction with respect to the first housing, the first rack gear may be configured to move in a second direction opposite to the first direction with respect to the second housing by magnetism, and the second rack gear may be configured to move in the first direction with respect to the second housing by rotation of the pinion gear corresponding to the movement of the first rack gear.

**In** an embodiment, the driving structure may further include a roller (450 in FIG. 7) spaced apart from the pinion gear within the second housing.

**In** an embodiment, when the second housing slides with respect to the first housing, a length by which the second display area extends on a front surface of the electronic device may be substantially equal to a length by which the second display area contracts on a rear surface of the electronic device.

**In** an embodiment, when the second housing slides in the first direction from one end of the first housing by a first distance (d1 in FIG. 16), the second rack gear may be configured to slide in the first direction by a second distance (d3 in FIG. 16) twice the first distance.

**In** an embodiment, when the second housing slides in the first direction at a first speed, the second rack gear may be configured to slide in the first direction at a second speed twice the first speed.

**In** an embodiment, a force applied to the display may be offset by a first force applied to the roller in the first direction and a second force applied to the second rack gear in the first direction.

**In** an embodiment, positions of the roller and the pinion gear may be fixed within the second housing.

In an embodiment, the first rack gear and the pinion gear may both be disposed within the second housing.

In an embodiment, the first housing may include a first cover member (311 in FIG. 5) and a first rear plate (313 in FIG. 5), and the first cover member may include a first front plate (3111 in FIG. 5) and a first support member (3112 in FIG. 5) extending in a thickness direction and forming a sidewall.

In an embodiment, the first support member may have a 'T' shape.

In an embodiment, the second housing may include a second cover member (321 in FIG. 7) including a second support member (3214 in FIG. 7), a rear cover (323 in FIG. 7), and a second rear plate (325 in FIG. 7), and the second cover member may include a second front plate (3213 in FIG. 7) and a guide portion (3211, 3212 in FIG. 7) forming at least a portion of a side surface of the electronic device and configured to guide sliding of the driving structure.

In an embodiment, the second rear plate may include a flat first surface (3251 in FIG. 9B) and a second surface (3252 in FIG. 9B) extending from the first surface and forming a curve, and a first waterproof member (371 in FIG. 9B) may be attached to an inner side of the second surface.

In an embodiment, the electronic device may further include a second waterproof member (372 in FIG. 5) disposed in a portion of the first support member, through which a flexible printed circuit board passes, and a third waterproof member (373 in FIG. 7) located in a portion of the second support member, through which the flexible printed circuit board passes.

In an embodiment, even when the second housing slides in the first direction by a magnetic attractive force between the first magnetic body and the first rack gear including the second magnetic body, a position of the first rack gear may not substantially move.

An electronic device according to an embodiment of the disclosure may include a first housing, a second housing configured to slide with respect to the first housing, a display including a first display area disposed on the first housing, and a second display area extending from the first display area, wherein at least a portion of the second display area is configured to roll based on the sliding of the second housing, and a driving structure configured to provide a driving force for the sliding of the second housing with respect to the first housing. The driving structure may include a first rack gear disposed in the second housing, a second rack gear disposed at least partially parallel to the first rack gear within the second housing and connected to the second display area, and a pinion gear disposed between the first rack gear and the second rack gear and configured to engage with both the first rack gear and the second rack gear.

In an embodiment, the driving structure may further include a first magnetic body fixedly disposed in the first housing, and the first rack gear may face the first magnetic body and include a second magnetic body having an opposite polarity to the first magnetic body.

In an embodiment, when the second housing slides in a first direction, the first rack gear may move with respect to the second housing in a second direction opposite to the first direction by magnetism, and the second rack gear may move with respect to the second housing in the first direction by rotation of the pinion gear corresponding to the movement of the first rack gear.

According to an embodiment, the driving structure may further include a roller spaced apart from the pinion gear within the second housing.

In an embodiment, when the second housing slides with respect to the first housing, a length by which the second display area extends on a front surface of the electronic device may be substantially equal to a length by which the second display area contracts on a rear surface of the electronic device.

| In an embodiment, when the second housing slides in the first direction from one end of the first housing by a first distance, the second rack gear may slide in the first direction by a second distance twice the first distance.

## Claims

1. An electronic device comprising:
a first housing (310);
a second housing (320) configured to slide with respect to the first housing;
a display (330) including a first display area disposed on the first housing and a second display area extending from the first display area, wherein at least a portion of the second display area is configured to bend based on the sliding of the second housing; and
a driving structure (400) configured to provide a driving force for the sliding of the second housing with respect to the first housing,
wherein the driving structure includes:
a first magnetic body (410) fixedly disposed on the first housing;
a first rack gear (420) disposed in the second housing, facing the first magnetic body, and including a second magnetic body (421) having a polarity opposite to a polarity of the first magnetic body;
a second rack gear (430) disposed at least partially parallel to the first rack gear within the second housing and connected to the second display area; and
a pinion gear (440) disposed between the first rack gear and the second rack gear and configured to engage with both the first rack gear and the second rack gear, and
wherein, when the second housing slides in a first direction with respect to the first housing, the first rack gear is configured to move in a second direction opposite to the first direction with respect to the second housing by magnetism, and the second rack gear is configured to move in the first direction with respect to the second housing by rotation of the pinion gear corresponding to the movement of the first rack gear.

2. The electronic device of claim 1, wherein the driving structure further includes a roller (450) spaced apart from the pinion gear within the second housing.

3. The electronic device of claim 1 or 2, wherein, when the second housing slides with respect to the first housing, a length by which the second display area extends on a front surface of the electronic device is substantially equal to a length by which the second display area contracts on a rear surface of the electronic device.

4. The electronic device of any one of claims 1 to 3, wherein, when the second housing slides in the first direction from one end of the first housing by a first distance (d1), the second rack gear is configured to slide in the first direction by a second distance (d3) twice the first distance.

5. The electronic device of any one of claims 1 to 4, wherein when the second housing slides in the first direction at a first speed, the second rack gear is configured to slide in the first direction at a second speed twice the first speed.

6. The electronic device of claim 2, wherein a force applied to the display is offset by a first force applied to the roller in the first direction and a second force applied to the second rack gear in the first direction.

7. The electronic device of claim 2, wherein positions of the roller and the pinion gear are fixed within the second housing.

8. The electronic device of any one of claims 1 to 7, wherein the first rack gear and the pinion gear are both disposed within the second housing.

9. The electronic device of any one of claims 1 to 8, wherein the first housing includes a first cover member (311) and a first rear plate (313), and
wherein the first cover member includes a first front plate (3111) and a first support member (3112) extending in a thickness direction and forming a side wall.

10. The electronic device of claim 9, wherein the first support member has a 'T' shape.

11. The electronic device of claim 9, wherein the second housing includes a second cover member (321) including a second support member (3214), a rear cover (323), and a second rear plate (325), and
wherein the second cover member includes a second front plate (3213) and a guide portion (3211, 3212) forming at least a portion of a side surface of the electronic device and configured to guide sliding of the driving structure.

12. The electronic device of claim 11, wherein the second rear plate includes a first surface (3251) which is flat and a second surface () extending from the first surface and forming a curve, and
wherein a first waterproof member (371) is attached to an inner side of the second surface.

13. The electronic device of claim 11, further comprising a second waterproof member (372) disposed in a portion of the first support member, through which a flexible printed circuit board passes; and
a third waterproof member (373) located in a portion of the second support member, through which the flexible printed circuit board passes.

14. The electronic device of any one of claims 1 to 13, wherein even when the second housing slides in the first direction by a magnetic attractive force between the first magnetic body and the first rack gear including the second magnetic body, a position of the first rack gear substantially does not move.

## Patentansprüche

1. Elektronisches Gerät, das Folgendes umfasst:
ein erstes Gehäuse (310);
ein zweites Gehäuse (320), das so konfiguriert ist, dass es in Bezug auf das erste Gehäuse gleitet;
ein Display (330) mit einem ersten Displaybereich, der auf dem ersten Gehäuse angeordnet ist, und einem zweiten Displaybereich, der sich vom ersten Displaybereich aus erstreckt, wobei mindestens ein Teil des zweiten Displaybereichs so konfiguriert ist, dass er sich basierend auf dem Gleiten des zweiten Gehäuses biegt; und
eine Antriebsstruktur (400), die so konfiguriert ist, dass sie eine Antriebskraft für das Gleiten des zweiten Gehäuses in Bezug auf das erste Gehäuse bereitstellt,
wobei die Antriebsstruktur Folgendes aufweist:
einen ersten Magnetkörper (410), der fest an dem ersten Gehäuse angeordnet ist;
ein erstes Zahnstangengetriebe (420), das im zweiten Gehäuse angeordnet ist, dem ersten Magnetkörper gegenüberliegt und einen zweiten Magnetkörper (421) mit einer Polarität aufweist, die der Polarität des ersten Magnetkörpers entgegengesetzt ist;
ein zweites Zahnstangengetriebe (430), das zumindest teilweise parallel zum ersten Zahnstangengetriebe innerhalb des zweiten Gehäuses angeordnet und mit dem zweiten Displaybereich verbunden ist; und
ein Ritzel (440), das zwischen dem ersten Zahnstangengetriebe und dem zweiten Zahnstangengetriebe angeordnet und so konfiguriert ist, dass es sowohl mit dem ersten Zahnstangengetriebe als auch mit dem zweiten Zahnstangengetriebe in Eingriff kommt, und
wobei, wenn das zweite Gehäuse in eine erste Richtung in Bezug auf das erste Gehäuse gleitet, das erste Zahnstangengetriebe so konfiguriert ist, dass es sich durch Magnetismus in einer zweiten Richtung entgegengesetzt zur ersten Richtung in Bezug auf das zweite Gehäuse bewegt, und das zweite Zahnstangengetriebe so konfiguriert ist, dass es sich durch Drehung des Ritzels entsprechend der Bewegung des ersten Zahnstangengetriebes in die erste Richtung in Bezug auf das zweite Gehäuse bewegt.

2. Elektronisches Gerät nach Anspruch 1, wobei die Antriebsstruktur ferner eine Rolle (450) aufweist, die innerhalb des zweiten Gehäuses von dem Ritzel beabstandet ist.

3. Elektronisches Gerät nach Anspruch 1 oder 2, wobei, wenn das zweite Gehäuse in Bezug auf das erste Gehäuse gleitet, eine Länge, um die sich der zweite Displaybereich auf einer Vorderseite des elektronischen Geräts erstreckt, im Wesentlichen gleich einer Länge ist, um die sich der zweite Displaybereich auf einer Rückseite des elektronischen Geräts verkürzt.

4. Elektronisches Gerät nach einem der Ansprüche 1 bis 3, wobei, wenn das zweite Gehäuse in die erste Richtung von einem Ende des ersten Gehäuses um einen ersten Abstand (d1) gleitet, das zweite Zahnstangengetriebe so konfiguriert ist, dass es in die erste Richtung um einen zweiten Abstand (d3) gleitet, der doppelt so groß wie der erste Abstand ist.

5. Elektronisches Gerät nach einem der Ansprüche 1 bis 4, wobei, wenn das zweite Gehäuse mit einer ersten Geschwindigkeit in die erste Richtung gleitet, das zweite Zahnstangengetriebe so konfiguriert ist, dass es mit einer zweiten Geschwindigkeit, die doppelt so groß wie die erste Geschwindigkeit ist, in die erste Richtung gleitet.

6. Elektronisches Gerät nach Anspruch 2, wobei eine auf das Display ausgeübte Kraft durch eine erste Kraft, die auf die Rolle in der ersten Richtung ausgeübt wird, und eine zweite Kraft, die auf das zweite Zahnstangengetriebe in der ersten Richtung ausgeübt wird, ausgeglichen wird.

7. Elektronisches Gerät nach Anspruch 2, wobei die Positionen der Rolle und des Ritzels innerhalb des zweiten Gehäuses fixiert sind.

8. Elektronisches Gerät nach einem der Ansprüche 1 bis 7, wobei das erste Zahnstangengetriebe und das Ritzel beide innerhalb des zweiten Gehäuses angeordnet sind.

9. Elektronisches Gerät nach einem der Ansprüche 1 bis 8, wobei das erste Gehäuse ein erstes Abdeckelement (311) und eine erste Rückplatte (313) aufweist, und
wobei das erste Abdeckelement eine erste Frontplatte (3111) und ein erstes Stützelement (3112) aufweist, das sich in einer Dickenrichtung erstreckt und eine Seitenwand bildet.

10. Elektronisches Gerät nach Anspruch 9, wobei das erste Stützelement eine T-Form aufweist.

11. Elektronisches Gerät nach Anspruch 9, wobei das zweite Gehäuse ein zweites Abdeckelement (321) mit einem zweiten Stützelement (3214), einer hinteren Abdeckung (323) und einer zweiten Rückplatte (325) aufweist, und
wobei das zweite Abdeckelement eine zweite Frontplatte (3213) und einen Führungsabschnitt (3211, 3212) aufweist, der mindestens einen Abschnitt einer Seitenfläche des elektronischen Geräts bildet und so konfiguriert ist, dass er das Gleiten der Antriebsstruktur führt.

12. Elektronisches Gerät nach Anspruch 11, wobei die zweite Rückplatte eine erste Fläche (3251), die flach ist, und eine zweite Fläche () aufweist, die sich von der ersten Fläche erstreckt und eine Krümmung bildet, und
wobei ein erstes wasserdichtes Element (371) an einer Innenseite der zweiten Fläche angebracht ist.

13. Elektronisches Gerät nach Anspruch 11, das ferner ein zweites wasserdichtes Element (372) umfasst, das in einem Abschnitt des ersten Stützelements angeordnet ist, durch das eine flexible Leiterplatte verläuft; und
ein drittes wasserdichtes Element (373), das in einem Abschnitt des zweiten Stützelements angeordnet ist, durch das die flexible Leiterplatte verläuft.

14. Elektronisches Gerät nach einem der Ansprüche 1 bis 13, wobei selbst dann, wenn das zweite Gehäuse durch eine magnetische Anziehungskraft zwischen dem ersten Magnetkörper und dem ersten Zahnstangengetriebe einschließlich des zweiten Magnetkörpers in die erste Richtung gleitet, sich die Position des ersten Zahnstangengetriebes im Wesentlichen nicht verändert.

## Revendications

1. Dispositif électronique comprenant :
un premier boîtier (310) ;
un deuxième boîtier (320) configuré pour coulisser par rapport au premier boîtier ;
un écran (330) incluant une première zone d'écran disposée sur le premier boîtier et une deuxième zone d'écran s'étendant à partir de la première zone d'écran, où au moins une partie de la deuxième zone d'écran est configurée pour se courber en fonction du coulissement du deuxième boîtier ; et
une structure d'entraînement (400) configurée pour fournir une force d'entraînement pour le coulissement du deuxième boîtier par rapport au premier boîtier,
où la structure d'entraînement inclut :
un premier corps magnétique (410) disposé de manière fixe sur le premier boîtier ;
un premier engrenage à crémaillère (420) disposé dans le deuxième boîtier, faisant face au premier corps magnétique, et incluant un deuxième corps magnétique (421) ayant une polarité opposée à la polarité du premier corps magnétique ;
un deuxième engrenage à crémaillère (430) disposé au moins partiellement parallèle au premier engrenage à crémaillère à l'intérieur du deuxième boîtier et relié à la deuxième zone d'écran ; et
un engrenage à pignons (440) disposé entre le premier engrenage à crémaillère et le deuxième engrenage à crémaillère et configuré pour s'engrener à la fois avec le premier engrenage à crémaillère et le deuxième engrenage à crémaillère, et
où, lorsque le deuxième boîtier coulisse dans une première direction par rapport au premier boîtier, le premier engrenage à crémaillère est configuré pour se déplacer dans une deuxième direction opposée à la première direction par rapport au deuxième boîtier par magnétisme, et le deuxième engrenage à crémaillère est configuré pour se déplacer dans la première direction par rapport au deuxième boîtier par rotation de l'engrenage à pignons correspondant au mouvement du premier engrenage à crémaillère.

2. Dispositif électronique selon la revendication 1, où la structure d'entraînement comprend en outre un rouleau (450) espacé de l'engrenage à pignons à l'intérieur du deuxième boîtier.

3. Dispositif électronique selon la revendication 1 ou 2, où, lorsque le deuxième boîtier coulisse par rapport au premier boîtier, la longueur sur laquelle la deuxième zone d'écran s'étend sur une surface avant du dispositif électronique est sensiblement égale à la longueur sur laquelle la deuxième zone d'écran se contracte sur une surface arrière du dispositif électronique.

4. Dispositif électronique selon l'une quelconque des revendications 1 à 3, où, lorsque le deuxième boîtier coulisse dans la première direction à partir d'une extrémité du premier boîtier sur une première distance (d1), le deuxième engrenage à crémaillère est configuré pour coulisser dans la première direction sur une deuxième distance (d3) deux fois supérieure à la première distance.

5. Dispositif électronique selon l'une quelconque des revendications 1 à 4, où, lorsque le deuxième boîtier coulisse dans la première direction à une première vitesse, le deuxième engrenage à crémaillère est configuré pour coulisser dans la première direction à une deuxième vitesse deux fois supérieure à la première vitesse.

6. Dispositif électronique selon la revendication 2, où une force appliquée à l'écran est compensée par une première force appliquée au rouleau dans la première direction et une deuxième force appliquée au deuxième engrenage à crémaillère dans la première direction.

7. Dispositif électronique selon la revendication 2, où les positions du rouleau et de l'engrenage à pignons sont fixées à l'intérieur du deuxième boîtier.

8. Dispositif électronique selon l'une quelconque des revendications 1 à 7, où le premier engrenage à crémaillère et l'engrenage à pignons sont tous deux disposés à l'intérieur du deuxième boîtier.

9. Dispositif électronique selon l'une quelconque des revendications 1 à 8, où le premier boîtier inclut un premier élément de couvercle (311) et une première plaque arrière (313), et
où le premier élément de couvercle inclut une première plaque avant (3111) et un premier élément de support (3112) s'étendant dans le sens de l'épaisseur et formant une paroi latérale.

10. Dispositif électronique selon la revendication 9, où le premier élément de support a une forme en « T ».

11. Dispositif électronique selon la revendication 9, où le deuxième boîtier inclut un deuxième élément de couvercle (321) incluant un deuxième élément de support (3214), un couvercle arrière (323) et une deuxième plaque arrière (325), et
où le deuxième élément de couvercle inclut une deuxième plaque avant (3213) et une partie de guidage (3211, 3212) formant au moins une partie d'une surface latérale du dispositif électronique et configurée pour guider le coulissement de la structure d'entraînement.

12. Dispositif électronique selon la revendication 11, où la deuxième plaque arrière inclut une première surface (3251) qui est plate et une deuxième surface ( ) s'étendant à partir de la première surface et formant une courbe, et
où un premier élément étanche (371) est fixé à un côté intérieur de la deuxième surface.

13. Dispositif électronique selon la revendication 11, comprenant en outre un deuxième élément étanche (372) disposé dans une partie du premier élément de support, à travers lequel passe une carte de circuit imprimé flexible ; et
un troisième élément étanche (373) situé dans une partie du deuxième élément de support, à travers lequel passe la carte de circuit imprimé flexible.

14. Dispositif électronique selon l'une quelconque des revendications 1 à 13, où, même lorsque le deuxième boîtier coulisse dans la première direction sous l'effet d'une force d'attraction magnétique entre le premier corps magnétique et le premier engrenage à crémaillère incluant le deuxième corps magnétique, la position du premier engrenage à crémaillère ne bouge pratiquement pas.
